# FASCICULE DE BREVET EUROPEEN

(11) **EP 3 878 561 B1**
(45) Date de publication et mention de la délivrance du brevet: **06.09.2023**
(21) Numéro de dépôt: 21161722.0
(22) Date de dépôt: 10.03.2021
(51) Int. Cl.: B05B 5/04, B05B 5/00, B05B 12/14, B05B 13/04, B05B 15/555, B05B 1/00

(54) **PULVÉRISATEUR, INSTALLATION COMPORTANT UN TEL PULVÉRISATEUR ET PROCÉDÉ ASSOCIÉ**
SPRÜHGERÄT, ANLAGE MIT EINEM SOLCHEN SPRÜHGERÄT UND ENTSPRECHENDES VERFAHREN
SPRAY, INSTALLATION COMPRISING SUCH A SPRAY AND ASSOCIATED METHOD

(30) Priorité: 11.03.2020 FR 2002419
(43) Date de publication de la demande: 15.09.2021
(73) Titulaire: Exel Industries, 51200 Epernay (FR)
(72) Inventeur: BEAUDOIN, Camilien, 75009 PARIS (FR); COLRAT, Michel, 75009 PARIS (FR); FAURE, Didier, 75009 PARIS (FR); FOUBERT, Guillaume, 75009 PARIS (FR); PROVENAZ, Philippe, 75009 PARIS (FR)
(74) Mandataire: Lavoix

(56) Documents cités:
- EP-A1- 3 479 905
- EP-A1- 3 536 407
- WO-A1-2014/006593
- US-A1- 2016 303 589
- US-A1- 2018 141 070

## Description

La présente invention concerne un pulvérisateur. La présente invention concerne également une installation équipée d'un tel pulvérisateur. La présente invention concerne, en outre, un procédé de mesure de valeurs d'au moins un paramètre d'un tel pulvérisateur.

De nombreuses installations de projection de fluide comportent un pulvérisateur dont au moins une partie est prévue pour être portée à un potentiel électrique élevé lors de la projection. Ainsi, la différence de potentiel électrique entre la pièce à recouvrir de fluide et le pulvérisateur tend à favoriser la projection des gouttelettes de fluide projetées jusqu'à la pièce, puisque les gouttelettes tendent à se charger électriquement au niveau du pulvérisateur et à suivre les lignes de champ électrique entre le pulvérisateur et la pièce. Il en résulte une augmentation du rendement de projection, puisque la quantité de fluide qui n'atteint pas la pièce est réduite.

Toutefois, les potentiels électriques élevés auxquels la tête du pulvérisateur sont portés imposent une isolation électrique entre la tête de pulvérisateur et les autres éléments de l'installation de projection, afin d'éviter la survenue d'arcs électriques potentiellement dangereux. En conséquence, le pulvérisateur est équipé du minimum d'organes nécessaires et les connexions électriques entre la tête de pulvérisateur et le robot sur lequel le pulvérisateur est monté sont arrangées de manière à isoler la tête de pulvérisateur du reste de l'installation tout en permettant d'imposer une différence de potentiel entre ces éléments. Lorsque le pulvérisateur n'est pas en fonctionnement, le potentiel électrique est ramené à la terre afin de permettre de rapprocher le pulvérisateur d'autres éléments de l'installation ou d'intervenir manuellement dessus sans risques.

Cependant, le pulvérisateur lui-même est un dispositif complexe comportant de nombreuses pièces mobiles telles qu'un bol entraîné en rotation à haute vitesse par une turbine, des vannes permettant de commencer et d'interrompre l'alimentation du bol en fluide à projeter ou encore une jupe générant des jets d'air contrôlés de manière précise pour conformer le jet de fluide de manière optimale. Tous ces éléments doivent coopérer pour permettre une projection efficace à haut rendement du fluide, et l'efficacité de la projection diminue rapidement si l'un ou l'autre de ces éléments est endommagé. En outre, de nombreux facteurs extérieurs sont susceptibles d'influer sur l'efficacité de la projection et/ou sur la qualité des pièces obtenues même si les pièces composant le pulvérisateur ne sont pas endommagées.

De manière générale, et notamment du fait du fonctionnement à haute tension, il est difficile d'évaluer les performances du pulvérisateur lorsqu'il est en fonctionnement. En conséquence, la maintenance du pulvérisateur est rendue difficile, notamment parce que des défauts ou avaries légères ne sont pas aisément détectables, ce qui empêche d'intervenir rapidement avant que les conséquences négatives de ces défauts soient trop grandes. En conséquence, il est nécessaire de prévoir une maintenance périodique avec une fréquence élevée, ce qui limite la disponibilité du pulvérisateur. A défaut, la qualité moyenne des produits dans la fabrication desquels le fluide est utilisé est diminuée quand les défauts non détectés du pulvérisateur se traduisent par des défauts de ces produits.

Même des pulvérisateurs dont le potentiel électrique ne varie pas au cours de leur fonctionnement sont complexes et souvent difficiles à surveiller, de sorte qu'ils tendent à souffrir de limitations similaires.

Le document EP 3 479 905 A1 décrit un dispositif de détermination d'état avec un dispositif de peinture, le dispositif de peinture comprenant un moteur pneumatique qui est entraîné en rotation par délivrance d'un gaz, un arbre tournant qui fait office de centre de rotation du moteur pneumatique, une tête d'atomiseur rotative qui est reliée à l'arbre tournant et pulvérise de la peinture, et une unité de détection de vibration qui détecte une vibration du dispositif de peinture. Le dispositif de détermination d'état comprend une unité d'acquisition de composante fréquentielle produite par un contact entre l'arbre tournant et le moteur pneumatique et une unité de détermination d'anomalie qui détermine s'il existe ou non une anomalie du moteur pneumatique sur la base d'un résultat d'acquisition par l'unité d'acquisition de composante fréquentielle.

Il existe donc un besoin pour un pulvérisateur de fluide présentant une plus grande disponibilité.

A cet effet, il est proposé un pulvérisateur comportant une tête de pulvérisateur configurée pour projeter un premier fluide, le pulvérisateur comportant, en outre, un module de mesure comportant au moins un capteur configuré pour mesurer des valeurs d'au moins un paramètre du pulvérisateur, un module électronique de commande configuré pour recevoir les valeurs mesurées et une alimentation électrique configurée pour alimenter électriquement le module de commande avec une tension d'alimentation électrique, et dans lequel la tête de pulvérisateur est configurée pour être portée à une première valeur de potentiel électrique lorsque le pulvérisateur est au repos et à une deuxième valeur de potentiel électrique lorsque la tête de pulvérisateur projette le premier fluide, la deuxième valeur étant strictement supérieure à la première valeur, une différence entre les première et deuxième valeurs étant notamment supérieure ou égale à 10 kilovolts, le module de mesure comportant un point de référence commun des potentiels électriques du module de mesure, le point de référence étant électriquement connecté à la tête de pulvérisateur.

L'invention permet de surveiller l'état du pulvérisateur pendant son fonctionnement, à haute tension, et de détecter des évènements qui pourraient avoir lieu pendant ce temps. En conséquence, il est plus aisé de détecter un dysfonctionnement (ou « défaut ») du pulvérisateur, y compris des dysfonctionnements de faible ampleur qui seraient difficiles à détecter autrement. En conséquence, le besoin d'une maintenance périodique du pulvérisateur est limité, et la disponibilité du pulvérisateur est améliorée tout en permettant une meilleure qualité moyenne de la pulvérisation que ne le permettent les pulvérisateurs de l'état de la technique.

Selon des modes de réalisations particuliers, le pulvérisateur comporte l'une ou plusieurs des caractéristiques suivantes, prise(s) isolément ou selon toutes les combinaisons techniquement possibles :
- le pulvérisateur comporte une base destinée à être fixée à un robot configuré pour déplacer le pulvérisateur et comportant au moins un conduit d'alimentation de la tête de pulvérisateur avec le premier fluide ou avec un deuxième fluide, la base présentant une face de liaison à laquelle la tête de pulvérisateur est fixée, la base et la tête de pulvérisateur étant alignées selon un axe, le conduit d'alimentation débouchant sur la face de liaison, la face de liaison comportant au moins une vanne configurée pour obturer le conduit d'alimentation, dans lequel le module de mesure comporte une bague entourant la face de liaison dans un plan perpendiculaire à l'axe.
- la bague est configurée pour coopérer avec la tête de pulvérisateur et/ou avec la base pour empêcher des projections de fluide d'atteindre au moins un capteur, l'alimentation et/ou le module de commande depuis l'extérieur du module de mesure.
- la tête de pulvérisateur comporte une turbine, un bol destiné à être entraîné en rotation par la turbine pour projeter le premier fluide lorsque le premier fluide est injecté dans le bol, et une jupe destinée à générer des flux d'air de conformation du premier fluide projeté.
- la bague est en appui contre la jupe.
- le point de référence des potentiels électriques est électriquement connecté à la jupe.
- au moins un capteur est un accéléromètre, le module de commande étant configuré pour commander une mesure, par l'accéléromètre, d'une accélération du pulvérisateur pendant une rotation du bol.
- au moins un capteur est configuré pour mesurer une température du pulvérisateur.
- ledit capteur est configuré pour mesurer une température de la jupe.
- le pulvérisateur comporte en outre au moins une vanne comprenant un pointeau mobile entre deux positions, au moins un capteur étant configuré pour mesurer une position du pointeau de la vanne.
- au moins un capteur est un accéléromètre, le module de commande étant configuré pour commander une mesure, par l'accéléromètre, d'une accélération du pulvérisateur pendant un déplacement du pulvérisateur.
- le module de commande est configuré pour comparer au moins une valeur d'accélération mesurée pendant un déplacement du pulvérisateur à un seuil prédéterminé et pour détecter un choc subi par le pulvérisateur en fonction de la comparaison.
- au moins un capteur est un microphone.
- l'alimentation comporte un organe de stockage d'énergie électrique.

Il est également proposé une installation comportant un robot équipé d'un pulvérisateur tel que précédemment décrit et un dispositif électronique d'analyse, le module de commande étant configuré pour générer, à partir des valeurs mesurées, un message de diagnostic et pour transmettre le message de diagnostic au dispositif d'analyse.

Selon des modes de réalisations particuliers, l'installation comporte l'une ou plusieurs des caractéristiques suivantes, prise(s) isolément ou selon toutes les combinaisons techniquement possibles :
- le dispositif d'analyse est distant du robot, le dispositif d'analyse étant fixe dans un référentiel de l'installation.
- l'installation comporte une station fixe dans un référentiel de l'installation, le robot étant configuré pour déplacer le pulvérisateur entre une position de fonctionnement et une position de transfert de données, le module de commande étant configuré pour transmettre le message de diagnostic au dispositif d'analyse, notamment par communication radiofréquence, lorsque le pulvérisateur est dans la position de transfert de données, la station comportant un module de réception du message de diagnostic et étant configurée pour transférer le message de diagnostic reçu au dispositif d'analyse.
- la station est configurée pour nettoyer la tête de pulvérisateur lorsque le pulvérisateur est dans la position de transfert de données, la tête de pulvérisateur étant accueillie à l'intérieur de la station lorsque le pulvérisateur est dans la position de transfert de données.
- la station comporte au moins un premier contact électrique, le pulvérisateur comportant au moins un deuxième contact électrique configuré pour être connecté au premier contact lorsque le pulvérisateur est dans la position de transfert de données, le module de commande étant configuré pour transmettre le message de diagnostic au module de réception via les premier et deuxième contacts électriques.
- l'alimentation comporte un organe de stockage d'énergie électrique, la station comportant un module de recharge configuré pour charger électriquement l'organe de stockage d'énergie électrique lorsque le pulvérisateur est dans la position de transfert de données. Il est également proposé un procédé de mesure d'au moins un paramètre d'un pulvérisateur comportant une tête de pulvérisateur configurée pour projeter un premier fluide et un module de mesure comportant au moins un capteur configuré pour mesurer des valeurs d'au moins un paramètre du pulvérisateur, un module électronique de commande configuré pour recevoir les valeurs mesurées et une alimentation électrique configurée pour alimenter électriquement le module de commande avec une tension d'alimentation électrique, le procédé comportant une étape de mesure, par le capteur d'au moins une valeur d'un paramètre du pulvérisateur.

Selon l'invention, le module de mesure comporte un point de référence des potentiels électriques du module de mesure, le point de référence étant électriquement connecté à la tête de pulvérisateur, le procédé comportant une étape d'augmentation d'un potentiel électrique de la tête de pulvérisateur depuis une première valeur jusqu'à une deuxième valeur, la tête de pulvérisateur présentant la deuxième valeur de potentiel électrique au cours de l'étape de mesure.

Des avantages de l'invention apparaîtront à la lecture de la description qui va suivre, donnée uniquement à titre d'exemple non limitatif, et faite en référence aux dessins annexés, sur lesquels :
[Fig 1] la figure 1 est une représentation schématique d'un premier exemple d'installation de projection de fluide selon l'invention, comportant un pulvérisateur,

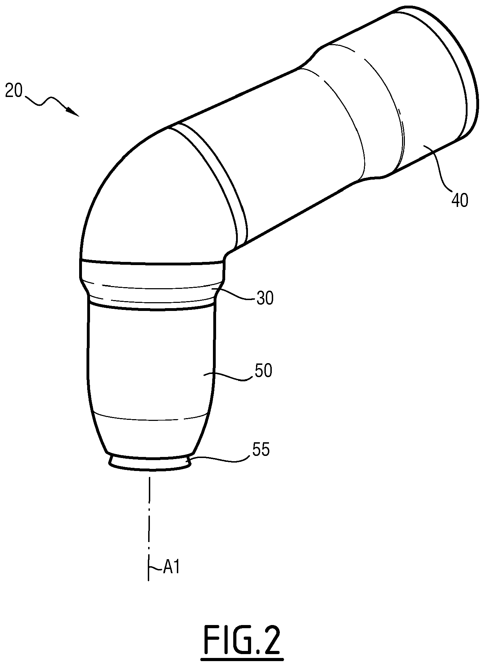

[Fig 2] la figure 2 est une représentation schématique d'un exemple de pulvérisateur de la figure 1, comportant un module de mesure,

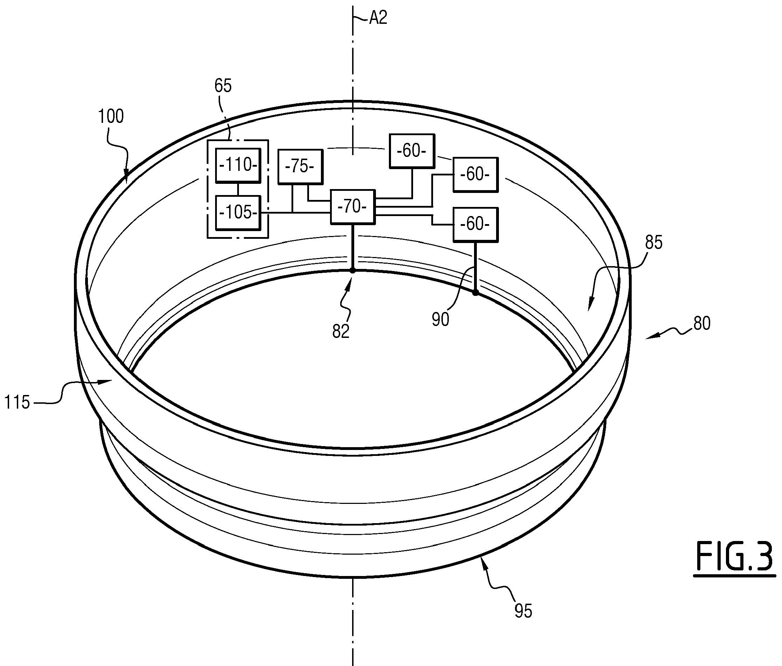

[Fig 3] la figure 3 est une représentation schématique d'un exemple de module de mesure de la figure 2,
[Fig 4] la figure 4 est un ordinogramme des étapes d'un procédé mis en oeuvre par l'installation de la figure 1,
[Fig 5] la figure 5 est un spectre fréquentiel d'un bruit acquis par un microphone du module de mesure de la figure 3, correspondant à un pulvérisateur non défectueux,
[Fig 6] la figure 6 est un spectre fréquentiel d'un bruit acquis par un microphone du module de mesure de la figure 3, correspondant à un pulvérisateur défectueux,
[Fig 7] la figure 7 est une représentation schématique d'un deuxième exemple d'installation de projection de fluide selon l'invention, et
[Fig 8] la figure 8 est un ordinogramme des étapes d'un procédé mis en oeuvre par l'installation de la figure 7.

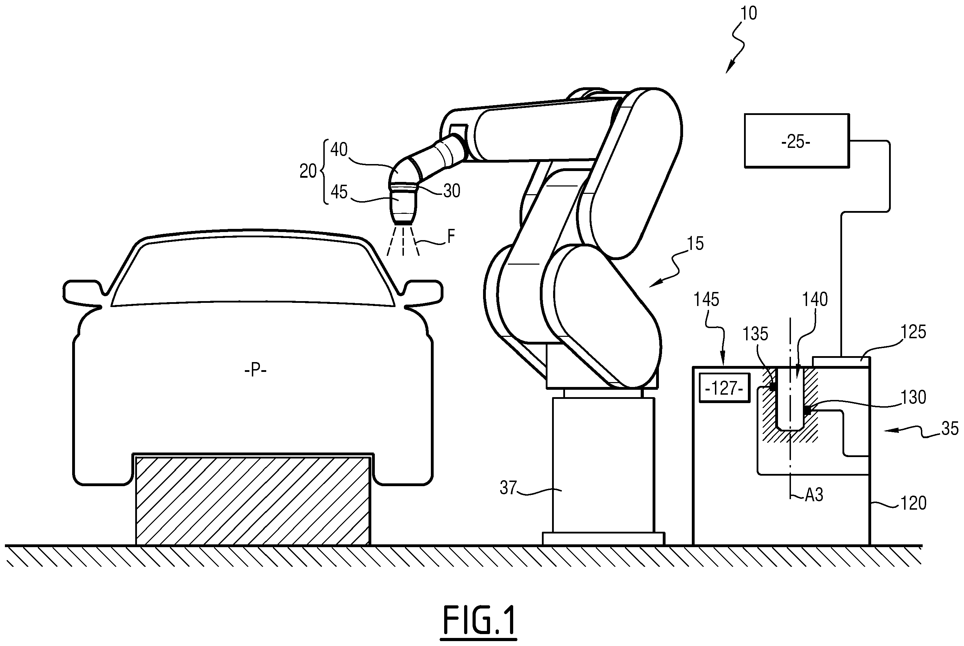

Un premier exemple d'installation 10 de projection de fluide est représenté partiellement sur la figure 1.

L'installation 10 comporte un robot 15, un pulvérisateur 20, un module de contrôle 25 du robot 15, et optionnellement une première station 35.

L'installation 10 est configurée pour projeter un premier fluide F.

Le premier fluide F est, notamment, un produit de revêtement tel qu'une peinture ou un vernis. Par exemple, le premier fluide F est une peinture ou un vernis prévu pour recouvrir au moins partiellement un panneau P de carrosserie automobile.

Le robot 15 supporte le pulvérisateur 20. Le robot 15 est, notamment, configuré pour déplacer le pulvérisateur 20 dans l'espace, en particulier pour orienter le pulvérisateur 20 dans une pluralité de directions de l'espace.

Le robot 15 est, notamment, configuré pour déplacer le pulvérisateur 20, dans un référentiel prédéterminé, entre une position de fonctionnement et une position de repos, également appelée parfois position de nettoyage.

Le référentiel est un référentiel fixe par rapport à un emplacement de l'installation 10. Le référentiel est, par exemple, le référentiel terrestre.

En particulier, le robot 15 est configuré pour déplacer le pulvérisateur 20 entre la position de fonctionnement et la position de repos par rapport à une base 37 du robot 15

Une distance entre le pulvérisateur 20 et la première station 35 lorsque le pulvérisateur est dans la position de fonctionnement est strictement supérieure à une distance entre le pulvérisateur 20 et la première station 35 lorsque le pulvérisateur est dans la position de repos.

Le robot 15 est, par exemple, un bras articulé comprenant des actionneurs propres à faire pivoter les différents segments du bras 15 les uns par rapport aux autres pour déplacer et orienter le pulvérisateur 20 dans l'espace.

Le robot 15 est, en outre, prévu pour alimenter le pulvérisateur 20 avec une tension ou un courant électrique et avec au moins un deuxième fluide tel qu'un gaz ou un solvant et avec un flux du premier fluide F à projeter.

En variante, le pulvérisateur 20 comporte une réserve du premier fluide F, et ne nécessite donc pas d'alimentation en premier fluide F via le robot 15.

Le gaz G est, par exemple, de l'air.

Le robot 15 est configuré pour déplacer le pulvérisateur 20 dans l'espace et/ou pour orienter le pulvérisateur 20 dans une pluralité de directions de l'espace en fonction de messages de commande reçus du module de contrôle 25. En outre, le robot 15 est configuré pour alimenter le pulvérisateur 20 avec une tension ou un courant électrique et/ou avec le ou les premier et deuxième fluides en fonction de messages de commandes correspondants.

Le pulvérisateur 20 comporte, de manière connue en soi, une base 40 et une tête de pulvérisateur 45. Le pulvérisateur 20 comporte en outre un module de mesure 30.

Selon un mode de réalisation, le pulvérisateur 20 comporte, de manière connue en soi, une réserve de fluide F, cette réserve étant par exemple intégrée dans la tête de pulvérisateur 45 ou dans la base 40.

La base 40 présente une première face solidaire du robot 15 et une deuxième face, également appelée face de liaison, à laquelle la tête de pulvérisateur 45 est fixée.

La base 40 est traversée par au moins un conduit propre à alimenter la tête de pulvérisateur 45 avec un fluide tel que le fluide F à projeter. Par exemple, la base 40 est traversée depuis la première face jusqu'à la face de liaison par une pluralité de conduits débouchant sur la face de liaison.

Au moins un conduit est configuré pour alimenter la tête de pulvérisateur 45 avec le fluide F à projeter. Au moins un autre conduit est configuré pour alimenter la tête de pulvérisateur 45 avec le gaz G. Optionnellement, au moins un conduit est configuré pour alimenter la tête de pulvérisateur 45 avec un liquide tel qu'un solvant.

De manière connue en soi, la base 40 comporte, par exemple, au moins une vanne configurée pour obturer ou ouvrir l'un des conduits de la base 40. Au moins une vanne est, par exemple, disposée sur la face de liaison.

La base 40 est, en outre, configurée pour alimenter la tête de pulvérisateur 45 avec un courant électrique. La face de liaison est, par exemple, traversée par un conducteur électrique configuré pour être, de manière connue en soi, connecté électriquement à la tête de pulvérisateur 45.

Par exemple, la base 40 est configurée pour imposer une différence de potentiel électrique entre la première face et le conducteur électrique.

En particulier, la base 40 est configurée pour modifier une valeur du potentiel électrique du conducteur électrique entre une première valeur et une deuxième valeur.

La première valeur de potentiel électrique est, par exemple, zéro. Dans ce cas, la première valeur de potentiel électrique est égale à une valeur de potentiel électrique d'une masse électrique de l'installation 10.

La deuxième valeur de potentiel électrique est strictement supérieure à la première valeur de potentiel électrique. Une différence entre les première et deuxième valeurs de potentiel électrique est, par exemple, supérieure ou égale à 10 kilovolts (kV), par exemple comprise entre 20 kV et 90 kV. Il est à noter que la deuxième valeur est susceptible de varier, par exemple au cours d'une trajectoire du robot 15.

La base 40 comporte, par exemple, un circuit électrique de transformation propre à générer une tension électrique égale à la deuxième valeur de potentiel électrique entre le conducteur électrique et la masse à partir d'une tension électrique d'alimentation.

La tête de pulvérisateur 45 est configurée pour projeter le fluide F. En particulier, la tête de pulvérisateur est configurée pour projeter le fluide F lorsque la tête de pulvérisateur est portée à la deuxième valeur de potentiel électrique.

La tête de pulvérisateur 45 comporte, de manière connue en soi, une jupe 50, un bol 55, un connecteur électrique et une turbine.

De manière connue, la tête de pulvérisateur 45 est configurée pour que l'ensemble des pièces de la tête de pulvérisateur 45 présentent un même potentiel électrique. En particulier, la valeur de potentiel électrique de la tête de pulvérisateur 45 est égale à la valeur de potentiel électrique du conducteur électrique de la base 40. Ainsi, la tête de pulvérisateur est configurée pour être portée, par la base 40, à la première valeur et à la deuxième valeur de potentiel électrique, en fonction de la valeur de potentiel électrique imposée par la base 40 au conducteur électrique.

La jupe 50 est configurée pour recevoir de la base 40 un flux de gaz G et pour générer à partir du flux reçu un ensemble de flux de confirmation du fluide F projeté.

Le bol 55 est configuré pour être entraîné en rotation par la turbine autour d'un axe A1. Le bol 55 est configuré pour générer un flux de fluide F lorsque du fluide F est injecté dans le fond du bol 55 pendant la rotation du bol 55.

Le connecteur électrique est électriquement connecté à la jupe 50, au bol 55, à la turbine et au conducteur électrique de la base 40.

Le module de contrôle 25 est configuré pour commander un déplacement du pulvérisateur 20 par le robot 15.

Le module de contrôle 25 est, en outre, configuré pour commander une alimentation de la tête de pulvérisateur 45 avec un flux du fluide F et/ou avec un flux du gaz G et/ou avec un flux du liquide. Par exemple, le module de contrôle 25 est configuré pour commander l'ouverture et/ou la fermeture de chaque vanne de la base 40.

Le module de contrôle 25 est, en outre, configuré pour commander la modification, par la base 40, du potentiel électrique de la tête de pulvérisateur 45 entre la première valeur et la deuxième valeur.

Le module de contrôle 25 comporte, par exemple, un processeur et une mémoire comportant des instructions logicielles qui, lorsqu'elles sont exécutées sur le processeur, forment un module de commande du déplacement du robot 15, un module de commande de l'alimentation de la tête de pulvérisateur 45 et un module de commande de la modification du potentiel électrique. En variante, au moins un de ces modules est réalisé sous la forme de circuits intégrés dédiés, ou encore de composants logiques programmables.

Le module de contrôle 25 comporte, par exemple, une interface homme-machine, par exemple un écran, un clavier et/ou une souris, pour permettre la transmission d'informations et/ou d'instructions entre le module de contrôle 25 et un opérateur.

Le module de contrôle 25 est, par exemple, un dispositif distant du robot 15. En particulier, le module de contrôle 25 est fixe dans le référentiel.

Par exemple, le module de contrôle est disposé en-dehors d'une enceinte délimitant un volume contenant le robot 15.

Le module de mesure 30 est configuré pour mesurer au moins une valeur d'un paramètre du pulvérisateur 20. Le module de mesure 30 est, en outre, configuré pour transmettre à un dispositif distant, par exemple au module de contrôle 25, au moins un message généré en fonction de la ou des valeurs mesurées.

Le module de mesure 30 comporte au moins un capteur 60, une alimentation électrique 65, un module électronique de commande 70 et un module de communication 75.

Dans le premier exemple, le module de mesure 30 est, par exemple, solidaire du pulvérisateur 20. Dans ce cas, le module de mesure 30 comporte, en outre, un premier boîtier 80.

Le module de mesure 30 est, par exemple, au moins partiellement interposé entre la base 40 et la tête de pulvérisateur 45.

En particulier, le module de mesure 30 est traversé par le ou les conduits et par le conducteur électrique reliant la base 40 à la tête de pulvérisateur 45.

Selon un mode de réalisation, le module de mesure 30 entoure au moins partiellement la face de liaison autour d'un deuxième axe A2. Dans ce cas, le premier boîtier 80 est en forme de bague entourant au moins partiellement la face de liaison.

Par exemple, la bague entoure totalement la face de liaison autour du deuxième axe A2, c'est-à-dire sur 360 degrés. En variante, la bague entoure partiellement la face de liaison. Par exemple, la bague est une portion annulaire entourant la face de liaison sur 240 degrés ou moins.

Au moins un élément parmi un capteur 60, l'alimentation 65, le module de commande 70 et/ou le module de communication 75 est encapsulé de manière étanche dans la bague 80 lorsque le module de mesure 30 est fixé à la tête de pulvérisateur 45.

Il est entendu par « encapsuler » que, la bague 80 coopère avec la tête de pulvérisateur 45 et/ou avec la base 40 pour empêcher des projections de fluide d'atteindre l'un quelconque des éléments précités depuis l'extérieur du module de mesure 30.

Il est à noter que des modes de réalisation dans lesquels la bague 80 n'assure pas une étanchéité entre l'intérieur et l'extérieur de la bague 80 sont également envisageables.

La bague entoure notamment au moins un élément parmi un capteur 60, l'alimentation 65, le module de commande 70 et/ou le module de communication 75, notamment chaque capteur 60, l'alimentation 65, le module de commande 70 et le module de communication 75 dans un plan perpendiculaire au deuxième axe A2.

En variante, au moins un élément parmi un capteur 60, l'alimentation 65, le module de commande 70 et/ou le module de communication 70 est enchâssé dans une masse d'un matériau électriquement isolant, notamment d'un matériau formant la bague 80.

Le deuxième axe A2 est perpendiculaire à la face de liaison et est, par exemple, confondu avec l'axe A1.

La base 40 et la tête de pulvérisateur 45 sont, par exemple, alignés selon l'axe A2.

Il est défini un point de référence des potentiels électriques du module de mesure 30.

Le point de référence est le point à partir desquels les potentiels électriques de chaque élément du module de mesure 30, notamment de chaque capteur 60, de l'alimentation électrique 65, du module électronique de commande 70 et du module de communication 75 sont définis.

Le point de référence est, notamment, le point auquel les différents courants électriques circulant dans le module de mesure 30 reviennent.

Un tel point de référence est parfois appelé « masse ». Dans la majorité des systèmes électriques, le point de référence est la terre.

En d'autres termes, le module de mesure 30 est configuré pour fonctionner en considérant le point de référence comme la masse électrique.

Par exemple, chaque capteur 60, l'alimentation électrique 65, le module électronique de commande 70 et le module de communication 75 sont chacun connectés électriquement au point de référence, directement ou indirectement.

Le module de mesure 30 est configuré pour que le point de référence soit électriquement connecté à la tête de pulvérisateur 45. En particulier, le point de référence est équipotentiel avec le conducteur électrique de la base 40. En d'autres termes, le point de référence du module de mesure 30 présente le même potentiel électrique que la tête de pulvérisateur 45, et notamment que le conducteur électrique de la base 40.

Le point de référence est, notamment, électriquement connecté à la jupe 50.

Par exemple, le module de mesure 30 comporte un contact électrique 82 en appui contre la tête de pulvérisateur 45, notamment contre la jupe 50. Il est à noter que des modes de réalisation dans lesquels le point de référence est électriquement connecté à un autre élément de la tête de pulvérisateur 45 que la jupe 50, par exemple la turbine ou un autre élément électriquement conducteur.

Dans ce cas, le contact électrique 82 joue le rôle de point de référence des potentiels électriques du module de mesure 30.

Le contact électrique 82 est, par exemple, électriquement connecté au module de commande 70. Il est à noter que le point de référence commun est défini par les différents circuits électriques qui composent le module de mesure 30. Aussi, des modes de réalisation dans lesquels le point de référence commun est connecté à un capteur 60, ou encore à un autre élément du module de mesure 30 sont également envisageables.

Ainsi, le module de mesure 30 est configuré pour fonctionner en considérant comme masse électrique le potentiel électrique imposé par la base 40 à la tête de pulvérisateur 45.

Chaque capteur 60 est, par exemple, fixé à une face interne 85 du premier boîtier 80. En particulier, chaque capteur 60 est entouré par la face interne 85 dans un plan perpendiculaire à l'axe A2.

Chaque capteur 60 est configuré pour mesurer des valeurs d'un paramètre du pulvérisateur 20. Chaque capteur 60 est, en outre, configuré pour transmettre les valeurs mesurées au module de commande 70.

En particulier, chaque capteur 60 est configuré pour mesurer et transmettre les valeurs lorsque le pulvérisateur 20 est porté à la deuxième valeur de potentiel électrique, par exemple pendant que le bol 55 est en rotation.

Chaque capteur 60 est, par exemple, choisi parmi la liste formée de : un accéléromètre, un capteur de température, un microphone, un capteur de position d'une vanne du pulvérisateur 20.

Il est à noter que d'autres exemples de capteurs 60 sont également susceptibles d'être intégrés au module de mesure 30.

Chaque accéléromètre 60 est configuré pour mesurer une accélération du pulvérisateur 20. Par exemple, l'accéléromètre 60 est configuré pour mesurer des valeurs d'une accélération du pulvérisateur 20 selon une direction. En variante, un même accéléromètre 60 est configuré pour mesurer des valeurs d'accélération du pulvérisateur selon deux ou trois directions perpendiculaires les unes aux autres.

En particulier, au moins un accéléromètre 60 est configuré pour mesurer une accélération du pulvérisateur 20 selon une direction perpendiculaire à l'axe A1 de rotation du bol 55. La mesure d'accélération dans cette direction permet de détecter un balourd du bol 55, indicatif d'un déséquilibre de ce bol 55 ou d'un défaut de la turbine.

La mesure d'une accélération selon une ou deux autres directions permet de détecter une accélération trop importante du pulvérisateur 20 au cours de son déplacement et susceptible d'entraîner un décrochement du bol 55, ainsi que de donner une indication sur une correction à apporter, par exemple en diminuant l'accélération ayant causé le décrochement ou encore en modifiant une trajectoire du pulvérisateur 20.

Chaque microphone 60 est configuré pour mesurer des valeurs d'un bruit généré par le pulvérisateur 20. Le bruit est, par exemple, un bruit généré par le bol 55 pendant une rotation du bol 55.

Chaque capteur de température 60 est configuré pour mesurer une température du pulvérisateur 20.

Il est entendu par « température du pulvérisateur 20 » une température d'un élément du pulvérisateur 20, par exemple une température de la tête de pulvérisateur 45. En particulier, chaque capteur de température 60 est configuré pour mesurer une température de la jupe 50. En variante, au moins un capteur de température 60 est configuré pour mesurer une température de la turbine, d'un conduit d'échappement d'air ou d'un autre élément du pulvérisateur 20.

Chaque capteur de température 60 comporte, par exemple, un thermocouple 90 en contact avec la tête de pulvérisateur 45, notamment en contact avec la jupe 50. Le thermocouple 90 est, par exemple, de niveau avec une face d'extrémité 95 du premier boîtier 80. Toutefois, d'autres types de capteurs de température sont également envisageables.

Chaque capteur de position est configuré pour mesurer une position d'une vanne, par exemple pour mesurer une course d'un pointeau d'une vanne intégrée à la face de liaison entre la base 40 et la tête 45 du pulvérisateur 20.

La face d'extrémité 95 délimite le premier boîtier 80 selon l'axe A2 et est en regard de la tête de pulvérisateur 45. En particulier, la face d'extrémité 95 est en appui contre la jupe 50.

Une autre face d'extrémité 100 délimite le premier boîtier 80 selon l'axe A2 et est en regard de la base 40.

L'alimentation électrique 65 est configurée pour alimenter électriquement le module de commande 70, le module de communication 75 et chaque capteur 60.

L'alimentation électrique 65 comporte, par exemple, un organe 105 de stockage d'énergie et un organe 110 de chargement.

L'organe de de stockage 105 est configuré pour stocker de l'énergie électrique. L'organe de stockage 105 comporte, par exemple, un condensateur. Le condensateur est, par exemple, un supercondensateur.

Il est à noter que d'autres types d'organes de stockage d'énergie électrique sont également envisageables, comme une batterie, rechargeable ou non.

L'organe de chargement 110 est configuré pour recevoir de l'énergie d'un dispositif extérieur au module de mesure 30 et pour charger l'organe de stockage 105 avec l'énergie reçue.

L'organe 110 est, notamment, un organe de chargement à induction. L'organe de chargement 110 comporte, par exemple, une antenne configurée pour recevoir un rayonnement électromagnétique et pour générer une différence de potentiel à partir du rayonnement reçu. L'organe de chargement 110 est, alors, configuré pour imposer la différence de potentiel à deux bornes de l'organe de mesure 105.

L'antenne de l'organe de chargement 110 comporte, par exemple, un enroulement électriquement conducteur.

En variante, l'organe de chargement 110 comporte deux bornes de connexion portées par une face externe 115 du premier boîtier 80, l'organe de chargement 110 étant configuré pour transmettre aux bornes de l'organe de mesure 105 une différence de potentiel électrique imposée aux deux bornes de l'organe de chargement 110.

Le module de commande 70 est configuré pour commander l'acquisition de valeurs d'au moins un paramètre du pulvérisateur 20 par chaque capteur 60.

Le module de commande 70 est configuré pour commander l'acquisition d'au moins une valeur, notamment de valeurs d'accélération du pulvérisateur, pendant que la tête de pulvérisateur 45 est portée à la deuxième valeur de potentiel électrique.

En outre, le module de commande 70 est configuré pour commander l'acquisition d'au moins une valeur, notamment de valeurs d'accélération du pulvérisateur, pendant une rotation du bol.

De plus, le module de commande 70 est configuré pour commander l'acquisition d'au moins une valeur, notamment de valeurs d'accélération du pulvérisateur, pendant un déplacement du pulvérisateur 20 par le robot 15.

Le module de commande 70 est configuré pour générer un message de diagnostic à partir d'au moins une valeur mesurée et pour transmettre le message de diagnostic au module de communication 75.

Par exemple, le module de commande 70 est configuré pour insérer au moins une valeur mesurée dans le message de diagnostic. En particulier, le module de commande 70 est configuré pour insérer une valeur de température mesurée dans le message de diagnostic.

La valeur de température mesurée est, par exemple, mesurée à l'issue d'une étape de projection du fluide F.

En variante ou en complément, le module de commande 70 est configuré pour calculer au moins une valeur de diagnostic à partir d'un ensemble de valeurs mesurées et pour insérer la ou les valeurs de diagnostic dans le message de diagnostic.

Chaque valeur de diagnostic est, par exemple, une valeur d'une amplitude ou d'un fréquence d'une composante fréquentielle, la composante fréquentielle étant une composante fréquentielle d'une accélération ou d'un bruit mesuré par le microphone.

Chaque valeur de diagnostic est, par exemple, calculée à partir d'au moins un coefficient d'une transformée de Fourier.

La transformée de Fourier est, par exemple, une transformée de Fourier des valeurs d'accélération mesurées, ou encore d'un bruit mesuré par le microphone.

En variante, la transformée de Fourier est une transformée de Fourier de valeurs de vitesse ou de déplacement du pulvérisateur 20, ces valeurs de vitesse ou de déplacement étant obtenues par intégration des valeurs d'accélération mesurées.

Selon une autre variante, chaque valeur de diagnostic est un coefficient d'une transformée de Fourier des valeurs d'accélération mesurées, ou encore d'un bruit mesuré par le microphone.

En variante ou en complément, au moins une valeur de diagnostic est, par exemple, une valeur maximale d'accélération du pulvérisateur 20.

Le module de commande 70 est, par exemple, configuré pour calculer les valeurs de coefficients et/ou de fréquence et/ou d'amplitude par transformée de Fourier rapide. La transformée de Fourier rapide, souvent désignée sous l'acronyme FFT, de l'Anglais « Fast Fourier Transform », est un algorithme de calcul d'une transformée de Fourier discrète.

Selon un mode de réalisation, le message de diagnostic comporte un ensemble de valeurs de diagnostic acquises pendant une rotation du bol 55.

En variante ou en complément, au moins une valeur de diagnostic est, par exemple, un identifiant d'un dysfonctionnement du pulvérisateur 20 ou d'un choc subi par le pulvérisateur 20, ce dysfonctionnement ou ce choc étant détecté par le module de commande 70 à partir des valeurs mesurées. Par exemple, le message de diagnostic comporte un identifiant du dysfonctionnement ou du choc et un indicateur d'un instant temporel, par exemple une date, et l'heure associée, du dysfonctionnement ou du choc.

Le module de commande 70 comporte, par exemple, un processeur et une mémoire comportant des instructions logicielles qui, lorsqu'elles sont exécutées sur le processeur, forment un module de commande de l'acquisition d'au moins une valeur par un capteur et un module de génération du message de diagnostic. En variante, au moins un de ces modules est réalisé sous la forme de circuits intégrés dédiés, ou encore de composants logiques programmables.

Le module de commande 70 comporte, par exemple, une horloge interne. Il est entendu par « horloge » tout dispositif propre à permettre au module de commande 70 de mesurer l'écoulement du temps. Un circuit générant un signal périodique associé à un compteur du nombre de périodes du signal est un exemple de telle horloge.

L'horloge est, par exemple, propre à permettre au module de commande 70 de mesurer directement un temps écoulé. Dans ce cas, le module de commande 70 est apte à associer chaque évènement, par exemple chaque valeur mesurée par un capteur, à une heure.

En variante, l'horloge est propre à permettre au module de commande 70 de compter un nombre d'évènements, par exemple à détecter un maximum d'un signal périodique, et à associer chaque valeur mesurée à un identifiant (par exemple un numéro) de l'un des évènements ou d'un intervalle entre deux des évènements. Dans ce cas, le module de commande 70 n'est pas apte à mesurer directement l'écoulement du temps, mais un dispositif externe peut établir une correspondance entre chaque identifiant et le temps correspondant.

Le module de communication 75 est configuré pour transmettre le message de diagnostic à un dispositif distinct du pulvérisateur 20. Le dispositif distinct est, par exemple, la première station 35.

Selon une variante, le dispositif distinct est le module de contrôle 25.

Le module de communication 75 est, notamment, configuré pour transmettre le message de diagnostic par communication radiofréquence.

La communication radiofréquence désigne la transmission de messages via un signal comportant au moins une onde électromagnétique radiofréquence.

Les ondes électromagnétiques radiofréquences sont les ondes électromagnétiques présentant une fréquence comprise entre 3 KiloHertz (KHz) et 3 GigaHertz (GHz).

Le module de communication 75 est, par exemple, propre à émettre ou à recevoir une onde électromagnétique présentant une fréquence supérieure ou égale à 13,553 MHz, et inférieure ou égale à 13,567 MHz.

De préférence, le module de communication 75 est propre à émettre et à recevoir une onde électromagnétique présentant une fréquence supérieure ou égale à 13,553 MHz, et inférieure ou égale à 13,567 MHz.

Avantageusement, le module de communication 75 utilise un protocole de communication en champ proche (de l'Anglais « Near-Field Communication », NFC). La communication en champ proche est une technologie de communication sans-fil à courte portée et haute fréquence, permettant l'échange d'informations entre des périphériques jusqu'à une distance d'environ 10 centimètres (cm). La technologie NFC est une extension de la norme ISO/CEI 14443.

En variante, le module de communication 75 est propre à émettre ou à recevoir une onde électromagnétique présentant une fréquence supérieure ou égale à 2400 MégaHertz (MHz) et inférieure ou égale à 2483,5 MHz.

De préférence, le module de communication 75 est propre à émettre et à recevoir une onde électromagnétique présentant une fréquence supérieure ou égale à 2400 MégaHertz (MHz) et inférieure ou égale à 2483,5 MHz.

Avantageusement, le module de communication 75 utilise un protocole de communication Bluetooth. Bluetooth est un standard de communication permettant l'échange bidirectionnel de données à très courte distance. Les normes définissant les protocoles Bluetooth sont définies par le « Bluetooth Special Interest Group ».

Selon une autre variante, le module de communication 75 utilise un autre type de protocole, par exemple un protocole Wi-Fi. Le Wi-Fi, aussi orthographié wifi, est un ensemble de protocoles de communication sans fil régis par les normes du groupe IEEE 802.11 (ISO/CEI 8802-11).

Selon une autre variante, le module de communication 75 est configuré pour transmettre le message de diagnostic via un signal électrique. Par exemple, le module de communication 75 comporte au moins un contact électrique débouchant sur la face externe 115 du premier boîtier 80 et configuré pour être connecté à un contact électrique correspondant de la première station 35.

Il est à noter que des modes de réalisation dans lesquels le module de communication 75 n'est pas présent sont également envisageables, par exemple dans ces cas où le pulvérisateur serait démonté de manière régulière pour extraire les valeurs mesurées et/ou les valeurs qui seraient autrement contenues dans le message de diagnostic.

La première station 35 est fixe dans le référentiel. Par exemple, la première station 35 est fixe par rapport à la base 37 du robot 15.

La première station 35 est configurée pour recevoir le message de diagnostic.

La première station 35 est, en outre, de manière connue en soi, configurée pour nettoyer le pulvérisateur 20 lorsque le pulvérisateur 20 est dans la position de repos.

En variante ou en complément, la première station 35 est configurée pour remplir la réserve de fluide F du pulvérisateur 20.

Il est à noter que des modes de réalisation dans lesquels la première station 35 ne permet pas le nettoyage et/ou le remplissage du pulvérisateur 20 sont également envisagés. Par exemple, la première station 35 a pour unique fonction la réception du message de diagnostic.

La première station 35 comporte un deuxième boîtier 120, un module de réception 125, un module de recharge 127, au moins une buse 130 de nettoyage et un connecteur 135 de remplissage.

Le deuxième boîtier 120 délimite une ouverture 140 d'accueil du pulvérisateur 20. Lorsque le pulvérisateur 20 est dans la position de repos, le pulvérisateur 20 est au moins partiellement accueilli dans l'ouverture 140.

L'ouverture 140 s'étend, par exemple, selon un axe A3 à partir d'une face supérieure 145 de la première station 35. Lorsque le pulvérisateur 20 est dans la position de repos, l'axe A1 est, par exemple, parallèle à l'axe A3.

Le module de réception 125 est configuré pour recevoir le message de diagnostic et pour transmettre le message de diagnostic à un dispositif configuré pour permettre l'échange d'informations avec un opérateur, ce dispositif étant par exemple le module de contrôle 25. Le module de réception 125 et le dispositif auquel le message de diagnostic est transmis par le module de réception 125 forment alors un dispositif d'analyse du message de diagnostic.

Le module de réception 125 comporte par exemple une antenne configurée pour recevoir le message de diagnostic.

Le module de réception 125 est, par exemple, porté par la face supérieure 145 du deuxième boîtier 120. En particulier, le module de réception 125 est en regard du module de mesure 30 lorsque le pulvérisateur 20 est dans la position de repos.

Lorsque le pulvérisateur 20 est dans la position de repos, une distance entre le module de réception 125 et le module de communication 75 est inférieure ou égale à 15 centimètres.

En variante, le module de réception 125 comporte au moins un contact électrique configuré pour venir en contact d'un contact électrique du module de mesure 30 lorsque le pulvérisateur 20 est dans la position de repos pour recevoir le message de diagnostic sous la forme d'un signal électrique.

Le module de recharge 127 est configuré pour recharger l'organe de stockage 105 lorsque le pulvérisateur 20 est dans la position de repos.

Par exemple, le module de recharge 127 est configuré pour générer un champ électromagnétique variable propre à générer une différence de potentiel électrique aux bornes de l'organe de chargement 110. Le module de recharge 127 comporte, par exemple, un enroulement électriquement conducteur dans lequel le module de recharge 127 est configuré pour faire circuler un courant électrique alternatif de manière à générer le champ électromagnétique variable.

Une distance entre le module de recharge 127 et l'organe de chargement 110, lorsque le pulvérisateur 20 est dans la position de repos, est inférieure ou égale à 5 centimètres.

De nombreux types de modules de recharge 127 par induction sont utilisés pour de nombreuses applications telles que la recharge de téléphones mobiles.

De manière connue en soi, la buse de nettoyage 130 est configurée pour nettoyer la tête de pulvérisateur 45 lorsque le pulvérisateur 20 est dans la position de repos, notamment par projection d'un flux de liquide, notamment d'un solvant, sur la tête de pulvérisateur 45.

Le connecteur de remplissage 135 est, de manière connue, configuré pour injecter dans la réserve du pulvérisateur 20 du fluide F lorsque le pulvérisateur 20 est dans la position de repos.

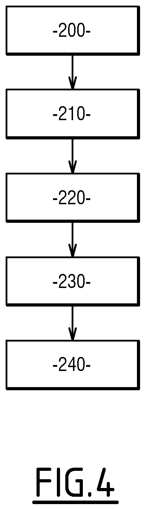

Le fonctionnement de l'installation 10 va maintenant être expliqué en référence à la figure 4, qui présente un ordinogramme des étapes d'un procédé de mesure d'au moins un paramètre du pulvérisateur 20.

Le procédé comporte une étape 200 initiale, une première étape 210 de déplacement, une étape 220 de pulvérisation, une deuxième étape 230 de déplacement et une étape 240 de transfert.

Lors de l'étape initiale 200, le pulvérisateur 20 est dans la position de repos.

Au cours de l'étape initiale 200, le pulvérisateur présente la première valeur de potentiel électrique.

Lors de la première étape de déplacement 210, le module de contrôle 25 commande un déplacement du pulvérisateur 20 jusqu'à la position de fonctionnement.

Le module de commande 70 commande, en outre, la mesure de valeurs d'accélération du pulvérisateur 20 par le ou les accéléromètres 60 au cours du déplacement du pulvérisateur 20.

Par exemple, chaque accéléromètre acquiert des valeurs d'accélération avec une période temporelle comprise entre 500 Hz et 5 kHz, par exemple égale à 3 kHz.

Chaque valeur mesurée par un capteur 60 est transmise au module de commande 70 et stockée dans la mémoire du module de commande 70.

Au cours de l'étape de déplacement 210, par exemple à l'issue du mouvement du pulvérisateur 20, le module de contrôle 25 commande la modification du potentiel électrique de la tête de pulvérisateur 45, par la base 40, depuis la première valeur jusqu'à la deuxième valeur.

Lors de l'étape de pulvérisation 220, le pulvérisateur 20, dans sa position de fonctionnement, projette le fluide F.

Au cours de l'étape de pulvérisation 220, la tête de pulvérisateur 45 présente la deuxième valeur de potentiel électrique.

Par exemple, de manière connue en soi, une différence de potentiel égale à la deuxième valeur de potentiel électrique est imposée entre un objet P que l'on désire recouvrir de fluide F et la tête de pulvérisateur 45. En particulier, l'objet P est mis à la masse.

En particulier, le point de référence des potentiels électriques présente la deuxième valeur de potentiel électrique.

Afin de pulvériser le fluide F, le bol 55 est entraîné en rotation autour de son axe et le fluide F est injecté dans le bol 55 pour générer le jet de fluide F. En outre, la jupe génère des jets de gaz G prévus pour conformer le jet de fluide F.

Au cours de l'étape de pulvérisation 220, le module de commande 70 commande l'acquisition d'au moins une valeur par au moins un capteur 60.

Par exemple, le module de commande 70 commande l'acquisition d'un ensemble de valeurs d'accélération du pulvérisateur 20 par un ou plusieurs accéléromètre 60 pendant la rotation du bol 55.

En variante ou en complément, le module de commande 70 commande l'acquisition de valeurs d'un bruit émis par le bol 55 lors de sa rotation.

En variante ou en complément, lors de l'étape de pulvérisation 220, un des capteurs 60 mesure des valeurs de position du pointeau de la vanne correspondante.

Par exemple, lors de l'étape de pulvérisation 220, le pointeau de la vanne est commuté entre une configuration ouverte dans laquelle la vanne est traversable par le fluide F ou par de l'air, et une configuration fermée dans laquelle la vanne est étanche au fluide F ou à l'air. Le capteur 60 mesure des valeurs de position du pointeau au cours de la commutation du pointeau.

Le module de commande 70 commande, en outre, l'acquisition d'un ensemble de valeurs de température de la tête de pulvérisateur 45, notamment de la jupe 50. Les valeurs de températures sont, par exemple, acquises avec une période temporelle comprise entre 1 seconde et 2 minutes. En particulier au moins une valeur de température est acquise au cours de chaque cycle de peinture.

Chaque valeur mesurée par un capteur 60 est transmise au module de commande 70 et stockée dans la mémoire du module de commande 70.

Lors de la deuxième étape de déplacement 230, le module de contrôle 25 commande le déplacement du pulvérisateur 20 par le robot 15 jusqu'à la position de repos.

En outre, le module de contrôle 25 commande la modification du potentiel électrique de la tête de pulvérisateur 45 depuis la deuxième valeur jusqu'à la première valeur. Par exemple, le potentiel électrique de la tête de pulvérisateur 45 atteint la première valeur avant le mouvement du pulvérisateur 20, ou encore pendant le mouvement du pulvérisateur 20 jusqu'à la position de repos.

Le module de commande 70 commande, en outre, l'acquisition de valeurs d'accélération pendant le mouvement du pulvérisateur depuis la position de fonctionnement jusqu'à la position de repos.

En complément facultatif, au moins une valeur de température est acquise pendant la deuxième étape de mesure.

Chaque valeur mesurée par un capteur 60 est transmise au module de commande 70 et stockée dans la mémoire du module de commande 70.

Lors de l'étape de transfert 240, le message de diagnostic est transmis par le module de communication 75 au module de réception 125. Selon une variante, le message de diagnostic est transmis directement du module de communication 75 au module de contrôle 25.

Par exemple, les valeurs de diagnostic sont générées par le module de commande 70 à partir des valeurs mesurées au cours de l'étape de transfert 240. En variante, au moins une valeur de diagnostic est générée au cours de la première étape de déplacement 210, de l'étape de pulvérisation 220, et/ou de la deuxième étape de déplacement 230. Selon un mode de réalisation, le calcul des valeurs de diagnostic est effectué en continu, chaque nouvelle valeur mesurée étant intégrée dans le calcul des valeurs de diagnostic dès que possible après l'acquisition de la valeur.

Au moins une valeur de diagnostic est, par exemple, une valeur maximum parmi les valeurs d'accélération acquises pendant chacune des étapes de déplacement 210 et 230.

Chaque valeur stockée dans le module de commande 70 est horodatée, c'est-à-dire associée à une date d'acquisition de la valeur ou à un identifiant de la date d'acquisition, que le module de contrôle 25 est configuré pour convertir en la date d'acquisition.

Les valeurs de diagnostic comportent, en outre, un ensemble de valeurs d'amplitude de composantes fréquentielles acquises pendant la rotation du bol 55. Les composantes fréquentielles sont des composantes fréquentielles de l'accélération et/ou du bruit mesuré.

Par exemple, les valeurs de diagnostic comportent, pour un ensemble de composantes fréquentielles prédéterminées, une valeur d'amplitude de chaque composante fréquentielle. L'ensemble des valeurs d'amplitude forme alors un spectre fréquentiel de l'accélération du pulvérisateur 20 ou du bruit émis par le pulvérisateur 20 pendant la rotation du bol 55.

En variante, les valeurs de diagnostic comportent, pour chacune d'un ensemble de plages de fréquences, une valeur représentative des amplitudes des composantes fréquentielles de la plage de fréquence considérée. La valeur représentative est, par exemple, une moyenne des amplitudes des composantes fréquentielles de la plage de fréquences considérée.

En variante ou en complément, les valeurs de diagnostic comportent une valeur de fréquence d'une composante fréquentielle de l'accélération mesurée, la valeur de fréquence étant la valeur associée à l'amplitude la plus élevée.

L'ensemble de valeurs de diagnostic comporte, par exemple, une valeur minimale et une valeur maximale parmi les valeurs de température mesurées.

En variante ou en complément, les valeurs de diagnostic comportent, par exemple, une valeur de durée d'une commutation de la vanne (également appelée « temps de réponse ») ou une valeur de déplacement du pointeau entre les configurations ouverte et fermée de la vanne, ces valeurs étant calculées par le module de commande 70.

Il est notamment entendu par « durée de commutation » une durée du mouvement du pointeau entre les configurations ouverte et fermée, ou vice-versa, de la vanne.

Le message de diagnostic est transmis par le module de réception 125 au module de contrôle 25.

Lors de l'étape de transfert 240, l'organe de stockage 105 est chargé électriquement par le module de recharge 127.

En outre, la tête de pulvérisateur 45 est nettoyée par la première station 35 au cours de l'étape de transfert 240. En complément facultatif, la réserve de fluide F du pulvérisateur 20 est remplie via le connecteur de remplissage 135.

Le module de contrôle 25 compare, par exemple, le spectre fréquentiel contenu dans les valeurs de diagnostic à un spectre de référence et détecte un dysfonctionnement du bol 55, par exemple un déséquilibrage du bol 55, à partir de la comparaison. Par exemple, si une différence entre une valeur d'amplitude contenue dans le message de diagnostic et une valeur d'amplitude, associée à la même fréquence, du spectre de référence est supérieure ou égale à un seuil, un dysfonctionnement est détecté. En variante, les valeurs comparées sont des valeurs représentatives des amplitudes d'une même plage de fréquences, respectivement issues du spectre de référence et du message de diagnostic.

Si au moins une valeur d'accélération mesurée pendant les étapes 210 et 203 de déplacement est supérieure ou égale à un seuil prédéterminé, le module de contrôle 25 détecte un choc du robot 15 ou du pulvérisateur 20.

Le module de contrôle 25 signale à l'opérateur tout dysfonctionnement ou choc détecté, par exemple via un affichage correspondant sur un écran.

Chaque choc détecté est associé, sur l'écran, à la date du choc, estimée à partir de l'horodatage de chaque valeur d'accélération supérieure ou égale au seuil. Par exemple, une position du robot 15 au moment du choc est affichée sur l'écran.

Les valeurs maximale et minimale de température mesurées sont également affichées sur l'écran.

Il est à noter que si le module de communication 75 est configuré pour transmettre le message de diagnostic à un dispositif distinct de la première station 35, par exemple directement au module de contrôle 25, l'étape de transfert 240 est susceptible d'être effectuée pendant que le pulvérisateur n'est pas dans la position de repos, par exemple pendant le déplacement du pulvérisateur 20 depuis la position de fonctionnement jusqu'à la position de repos.

Puisque le point de référence des potentiels électriques du module de mesure 30 est électriquement connecté à la tête de pulvérisateur 45, le module de mesure 30 permet de mesurer des valeurs de paramètres du pulvérisateur 20 pendant le fonctionnement de celui-ci, et notamment lorsque la tête de pulvérisateur est portée à un potentiel électrique élevé par rapport au reste de l'installation 10. Ainsi, le module de mesure 30 permet d'effectuer une maintenance de l'installation 10 dès qu'un dysfonctionnement du pulvérisateur 20 est détecté. En outre, effectuer les mesures pendant que la tête de pulvérisateur est à un haut potentiel électrique permet d'accéder à des informations qui n'auraient pas été disponibles autrement, par exemple de détecter un choc ayant lieu à ce moment, et évite également de ralentir le fonctionnement de l'installation en prévoyant une plage de temps spécifique pour effectuer les mesures.

Il est à noter que dans des modes de réalisation non couverts par les revendications des modules de mesure 30 comportant des capteurs 60 sont également susceptibles d'être utilisés dans des installations dans lesquelles le potentiel électrique du pulvérisateur n'est pas modifié au cours de la pulvérisation, et permettent alors de mieux détecter des dysfonctionnements ou des incidents liés au pulvérisateur 20. Dans ce cas, le point de référence des potentiels électriques n'est pas nécessairement connecté à la tête de pulvérisateur 45.

Le module de mesure 30 intégré à une bague entourant la face de liaison entre la base 40 et la tête de pulvérisateur 45 permet d'adapter le module de mesure 30 aux installations déjà existantes avec le minimum de modifications de la base 40 et/ou de la tête de pulvérisateur 45, puisque des bagues sont déjà prévues à cet emplacement pour protéger les vannes traversant la face de liaison.

Fixer les différents organes 60, 65, 70, 75 du module de mesure 30 à la face interne de la bague permet de faciliter la fabrication du module de mesure 30 tout en le rendant aisé à mettre en place et en permettant une bonne précision des mesures effectuées.

L'appui de la bague 80 du module de mesure 30 contre la jupe 50 permet de mesurer aisément des paramètres de la jupe, notamment sa température, et de mesurer avec une grande précision des paramètres du pulvérisateur 20 à cause de la grande surface de contact entre pulvérisateur 20 et module de mesure 30.

Connecter électriquement le point de référence du module de mesure 30 à la jupe 50 permet de mettre le point de référence au même potentiel que la tête de pulvérisateur 45 de manière simple et de manière fiable.

La mesure d'accélération du pulvérisateur 20, par un accéléromètre 60 du module de mesure 30, permet de détecter des chocs subis par le robot 15 ou le pulvérisateur 20, ainsi que de détecter un dysfonctionnement du pulvérisateur 20, notamment un déséquilibre du bol 50 lié à une déformation du bol 50 suite à un choc, ou encore un dysfonctionnement de la turbine.

Mesurer l'accélération pendant un déplacement du pulvérisateur 20 permet notamment de détecter un choc au cours de ce déplacement et ainsi d'adapter la trajectoire du robot 15 en cas de besoin. Pour cela, comparer les valeurs d'accélération à un seuil permet de détecter un choc de manière simple.

La mesure d'accélération pendant une rotation du bol 55 permet de détecter un déséquilibre de celui-ci.

La mesure d'une température du pulvérisateur 20 permet de détecter un refroidissement excessif lié à la détente des gaz utilisés pour conformer le jet de fluide F ou pour entraîner en rotation la turbine, et donc d'éviter que la condensation de vapeur d'eau sur le pulvérisateur 20 ait des effets néfastes sur la qualité de la pièce que l'on cherche à recouvrir de fluide F, soit en interférant avec la pulvérisation soit par chute de gouttes d'eau sur la pièce. Mesurer la température de la jupe 50 permet d'obtenir de manière fiable une information représentative de l'état du pulvérisateur 20, puisque la jupe 50 représente une grande partie de la surface de la tête de pulvérisateur 45.

Un microphone permet également de détecter un déséquilibre du bol 55, par exemple une déformation de celui-ci ou une désorientation spatiale par rapport à l'axe A1, à partir du bruit émis par le bol 55 lors de sa rotation.

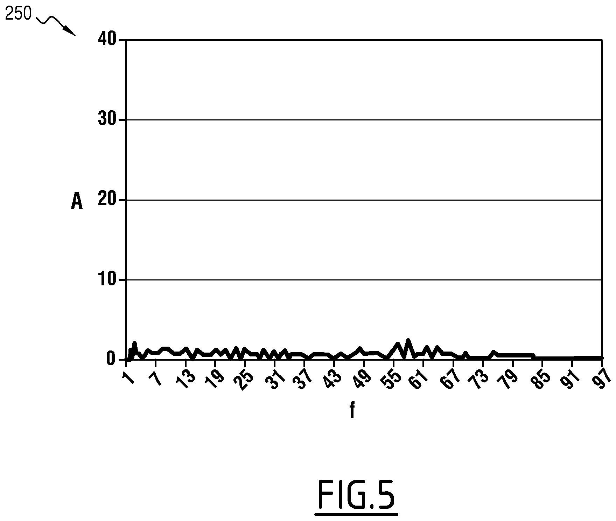

En particulier, la figure 5 représente un graphe 250 d'un spectre fréquentiel du bruit mesuré pendant la rotation d'un bol 55 non défectueux à 25000 tours par minutes. En particulier, une amplitude A (en unités arbitraires) de composantes fréquentielles du bruit mesuré est représentée en fonction de la fréquence f (en unités arbitraires).

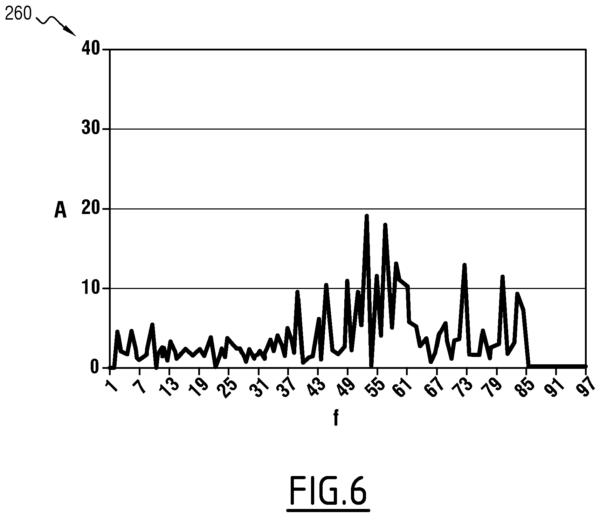

La figure 6 représente un graphe 255 d'un spectre fréquentiel du bruit mesuré pendant la rotation d'un bol 55 défectueux à 25000 tours par minutes. En particulier, une amplitude A (en unités arbitraires) de composantes fréquentielles du bruit mesuré est représentée en fonction de la fréquence f. Il apparaît ainsi que la comparaison des deux spectres, et notamment la comparaison à un seuil d'une ou plusieurs différences, chaque différence étant une différence entre des amplitudes associées à une même fréquence, permet de détecter un bol 55 défectueux.

L'intégration du module de réception 125 à la première station 35 permet d'adapter aisément une installation déjà existante, et de permettre le transfert des informations issues de la mesure sans perte de temps additionnelle pendant le nettoyage du pulvérisateur 20. L'utilisation d'un message de diagnostic radiofréquence permet également de limiter les modifications à apporter à l'installation 10, puisque la trajectoire du pulvérisateur 20 n'a pas à être modifiée pour venir en contact de connecteurs électriques pour transférer le message de diagnostic. Ainsi, les risques de génération d'un arc électrique ou de salissure de l'installation 10 sont limités.

Si au contraire le message de diagnostic est transmis par signal électrique, la consommation électrique du module de mesure 30 est limitée.

La présence de l'organe de stockage 105 et son chargement par la station 35, notamment par induction, permet là encore de minimiser les adaptations à apporter à l'installation 10.

Un deuxième exemple d'installation 10 va maintenant être décrit. Les éléments identiques au premier exemple ne sont pas décrits à nouveau. Seules les différences sont mises en évidence.

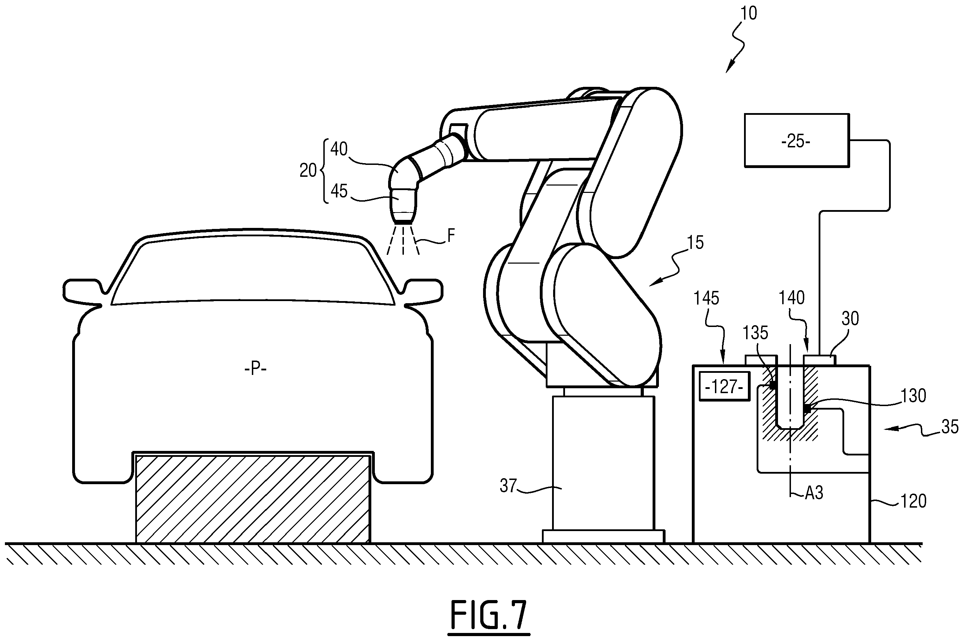

Le deuxième exemple d'installation 10 est représenté sur la figure 7.

Le deuxième exemple d'installation 10 est susceptible de comporter un pulvérisateur 20 dont le potentiel électrique n'est pas modifié au cours de son fonctionnement, par exemple un pulvérisateur 20 relié à la masse au cours de la pulvérisation.

Le module de mesure 30 est solidaire de la première station 35. En particulier, le module de mesure 30 n'est pas monté sur le pulvérisateur 20 ni solidaire de celui-ci.

Le robot 15 est apte à déplacer le pulvérisateur 20 par rapport au module de mesure 30.

Lorsque le pulvérisateur 20 est dans la position de repos, une distance entre le pulvérisateur 20 et le module de mesure 30 est inférieure ou égale à 20 centimètres (cm). Par exemple, le pulvérisateur 20 est en appui contre la première station 35, notamment contre le module de mesure 30. En particulier, la jupe 50 est en contact avec le module de mesure 30 lorsque le pulvérisateur 20 est dans la position de repos.

Le module de mesure 30 est configuré pour mesurer des valeurs de paramètres du pulvérisateur lorsque le pulvérisateur 20 est dans la position de repos.

Le module de mesure 30 entoure au moins partiellement l'axe A3 de l'ouverture 140. En particulier, le module de mesure 30 entoure au moins partiellement le pulvérisateur 20 lorsque le pulvérisateur 20 est dans la position de repos.

Le boîtier 80 du module de mesure forme une bague délimitant par exemple au moins partiellement l'ouverture 140 dans un plan perpendiculaire à l'axe A3. La bague forme alors, par exemple, une paroi interne de la première station 35.

En variante, le boîtier 80 forme une bague entourant partiellement l'axe A3, par exemple sur un angle de 240 degrés ou moins. Il est à noter que le positionnement et la forme du boîtier 80 sont susceptibles de varier.

Chaque capteur 60 est, notamment, solidaire de la bague. Par exemple, chaque capteur 60 est porté par et fixé à la bague. Par exemple, chaque capteur 60 est fixé à la paroi 85 de la bague qui délimite l'ouverture 140. En particulier, chaque capteur 60 est disposé radialement à l'extérieur de la paroi 85 de la bague qui délimite l'ouverture 140. Ainsi, les capteurs 60 sont protégés contre d'éventuelles éclaboussures et isolés électriquement du reste de l'installation par la paroi 85.

Le capteur de température 60 est, par exemple, configuré pour être en contact de la tête de pulvérisateur 45, notamment de la jupe 50, lorsque le pulvérisateur 20 est dans la position de repos. Le capteur de température 60 s'étend notamment à travers la bague formée par le boîtier 80.

Chaque accéléromètre 60 est configuré pour mesurer des valeurs d'une accélération de la première station 35, notamment du module de mesure 30.

Un procédé de mesure d'au moins un paramètre du pulvérisateur 20, mis en oeuvre par le deuxième exemple d'installation 10, va maintenant être décrit.

Le procédé comporte une étape de pulvérisation 220, une étape de déplacement 230 et une étape de mesure.

Lors de l'étape de pulvérisation 220, le pulvérisateur 20, dans sa position de fonctionnement, projette le fluide F.

Au cours de l'étape de pulvérisation 220, la tête de pulvérisateur 45 présente la deuxième valeur de potentiel électrique.

Par exemple, de manière connue en soi, une différence de potentiel égale à la deuxième valeur de potentiel électrique est imposée entre un objet P que l'on désire recouvrir de fluide F et la tête de pulvérisateur 45. En particulier, l'objet P est mis à la masse.

Afin de pulvériser le fluide F, le bol 55 est entraîné en rotation autour de son axe et le fluide F est injecté dans le bol 55 pour générer le jet de fluide F. En outre, la jupe génère des jets de gaz G prévus pour conformer le jet de fluide F.

Lors de l'étape de déplacement 230, le pulvérisateur 20 est déplacé par le robot 15 depuis la position de fonctionnement jusqu'à la position de repos. En outre, le potentiel électrique du pulvérisateur 20 est modifié depuis la deuxième valeur jusqu'à la première valeur.

Lors de l'étape de mesure, le bol 55 est mis en rotation autour de son axe. Par exemple, le module de contrôle 55 commande la rotation du bol 55.

Des valeurs d'accélération de la première station 35 sont mesurées par chaque accéléromètre 60 pendant la rotation du bol.

En outre, au moins une valeur de température de la tête de pulvérisateur 45, notamment de la jupe 50, est mesurée par un capteur de température 60 lorsque le pulvérisateur 20 est dans la position de repos.

Les valeurs de diagnostic sont générées de manière similaire au premier exemple d'installation, les valeurs d'accélération utilisées étant des valeurs d'accélération de la première station 35 et non des valeurs d'accélération du pulvérisateur 20.

Le fait de placer le module de mesure 30 dans la première station 35 permet de simplifier le module de mesure 30, qui n'a plus à être connecté à la haute tension. En outre, le module de mesure 30 n'a pas besoin d'embarquer un organe de stockage d'énergie électrique 105.

De plus, il n'est alors pas nécessaire de modifier un pulvérisateur 20 déjà existant pour en permettre la mesure de paramètres.

En outre, le module de mesure 30 peut aussi transmettre les informations de manière filaire analogique ou par le biais d'un réseau filaire, ce qui présente l'avantage d'être moins soumis aux contraintes électromagnétiques environnantes qu'une transmission sans fil.

Le calcul et le stockage local des défauts dans le micro-processeur embarqué dans le module de commande 70 n'est plus nécessaire

Enfin le module de mesure 30 disposé dans la station 35 n'est pas soumis à la salissure d'overspray (i.e par des projections de fluide) qui interviendrait lors de l'application.

Si la première station 35 est une station utilisée pour le nettoyage et/ou le remplissage du pulvérisateur 20, l'installation 10 est susceptible d'être aisément obtenue en modifiant de manière limitée une installation existante.

Lorsque le module de mesure 30 forme une bague 80 entourant le pulvérisateur 20 quand celui-ci est dans la deuxième position, de nombreux capteurs 60 peuvent être mis en contact avec le pulvérisateur 20, notamment lorsque les capteurs 60 sont fixés à la paroi de la bague 80 qui délimite l'ouverture. En outre, le module de mesure 30 peut être installé sur une station 35 de nettoyage d'un type connu, en disposant le module de mesure 30 de manière à effectuer les mesures lorsque le pulvérisateur 20 est dans la position dans laquelle il est nettoyé.

Un microphone permet notamment de détecter un dysfonctionnement du bol 55 même en l'absence de contact entre le pulvérisateur 20 et la station 35. La mesure est donc rendue très fiable car elle ne dépend pas de la qualité de l'appui entre pulvérisateur 20 et station 35.

Lorsque la première station 35 est distincte de la station utilisée pour le nettoyage et/ou le remplissage du pulvérisateur 20, la première station 35 est susceptible d'être utilisée pour mesurer des paramètres du pulvérisateur qui seraient incompatibles avec une proximité trop grande avec cette station de nettoyage, par exemple la mesure de la deuxième valeur de potentiel électrique. En effet, la première station 35 est susceptible d'être isolée électriquement du reste de l'installation 10, de manière beaucoup plus aisée que ne le serait une telle isolation de la station de nettoyage.

La mesure d'un potentiel électrique du pulvérisateur 20 permet de détecter des dysfonctionnements liés à l'alimentation électrique de la tête de pulvérisateur 45, et notamment une dérive de la deuxième valeur de potentiel électrique qui risquerait de déboucher sur une pulvérisation imparfaite si la deuxième valeur est trop basse.

L'utilisation d'une station 35 propre à déplacer le module de mesure 30 permet notamment une telle isolation de manière aisée, puisque notamment le module de mesure 30 est susceptible d'être éloigné des autres dispositifs de l'installation 10 lorsqu'il est rapproché ou mis en contact du pulvérisateur 20 pour effectuer la mesure.

L'utilisation d'une station 35 fixe dans le référentiel de l'installation 10 permet, elle, de simplifier l'installation 10.

Selon une variante du deuxième exemple, le module de mesure 30 n'est pas coaxial avec l'ouverture 140. Par exemple, le module de mesure 30 est disposé sur une face latérale de la première station 35. Dans ce cas, la position de repos n'est pas une position de nettoyage. Le pulvérisateur 20 est nettoyé et/ou rempli de fluide F dans une position de nettoyage dans laquelle le module de mesure 30 est accueilli au moins partiellement dans l'ouverture 140.

Cette variante peut s'avérer plus aisée à intégrer en fonction notamment des dimensions des pulvérisateurs 20 et des premières stations 35 existantes.

Selon une autre variante, le module de mesure 30 n'est pas en contact avec le pulvérisateur 20 lorsque le pulvérisateur 20 est dans la position de repos.

Dans ce cas, le module de mesure 30 est, par exemple, dépourvu d'accéléromètre.

Au moins un capteur 60 est, par exemple, configuré pour mesurer une accélération, une vitesse ou un déplacement du pulvérisateur 20 sans contact avec celui-ci par exemple par réflexion d'un faisceau laser sur la surface extérieure du pulvérisateur.

En variante ou en complément, au moins un capteur 60 est configuré pour mesurer un bruit émis par le bol 55 pendant sa rotation.

Chaque capteur de température 60 est, par exemple, configuré pour mesurer une température du pulvérisateur 20, notamment de la jupe 50, par mesure d'un rayonnement infra-rouge émis par le pulvérisateur 20.

Selon un troisième exemple d'installation 10, l'installation comporte, outre la première station 35, une deuxième station.

La première station 35 comporte le module de mesure 30. Par exemple, le module de mesure 30 est monté sur un bras mobile de la première station 35, la première station 35 étant configurée pour déplacer le module de masure entre une première position dans laquelle le module de mesure 30 est distant du pulvérisateur 20 lorsque le pulvérisateur est dans la position de repos et une deuxième position dans laquelle le module de mesure 30 est en contact avec le pulvérisateur 20 lorsque le pulvérisateur est dans la position de repos.

La deuxième station est, par exemple, fixe par rapport à la base 37 du robot 15.

La deuxième station comporte l'ouverture 140, la buse de nettoyage 130 et le connecteur de remplissage 135.

Le module de mesure 30 comporte, par exemple, outre les capteurs 60 déjà mentionnés, un capteur 60 configuré pour mesurer une valeur de potentiel électrique du pulvérisateur lorsque le module de mesure 30 est en contact avec le pulvérisateur.

Un procédé de mesure d'au moins un paramètre du pulvérisateur 20, mis en oeuvre par le troisième exemple d'installation 10, va maintenant être décrit.

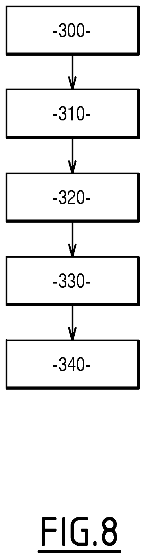

Le procédé comporte une étape de pulvérisation 300, une première étape de déplacement 310, une étape de mesure 320 et, optionnellement, une deuxième étape de déplacement 330 et une étape d'entretien 340. Un ordinogramme des étapes de ce procédé est représenté sur la figure 8.

Il est à noter que l'ordre des étapes 300 à 340 est susceptible d'être modifié.

Lors de l'étape de pulvérisation 300, le pulvérisateur 20, dans sa position de fonctionnement, projette le fluide F.

Au cours de l'étape de pulvérisation 300, la tête de pulvérisateur 45 présente la deuxième valeur de potentiel électrique.

Par exemple, de manière connue en soi, une différence de potentiel égale à la deuxième valeur de potentiel électrique est imposée entre un objet P que l'on désire recouvrir de fluide F et la tête de pulvérisateur 45. En particulier, l'objet P est mis à la masse.

Afin de pulvériser le fluide F, le bol 55 est entraîné en rotation autour de son axe et le fluide F est injecté dans le bol 55 pour générer le jet de fluide F. En outre, la jupe génère des jets de gaz G prévus pour conformer le jet de fluide F.

Lors de la première étape de déplacement 310, le pulvérisateur 20 est déplacé par le robot 15 depuis la position de fonctionnement jusqu'à la position de repos. En outre, le module de mesure 30, s'il est mobile, est déplacé jusqu'à sa deuxième position.

Le potentiel électrique du pulvérisateur 20 reste fixé à la deuxième valeur par la base 40 du pulvérisateur 20 pendant la première étape de déplacement 310.

Au moins une valeur du potentiel électrique du pulvérisateur 20, notamment du potentiel électrique de la jupe 50, est mesurée pendant l'étape de mesure 320. En particulier, la deuxième valeur de potentiel électrique est mesurée.

Postérieurement à la mesure de la valeur du potentiel électrique, le potentiel électrique du pulvérisateur 20 est modifié depuis la deuxième valeur jusqu'à la première valeur.

Lors de l'étape de mesure 320, le bol 55 est mis en rotation autour de son axe. Par exemple, le module de contrôle 55 commande la rotation du bol 55.

Des valeurs d'accélération du module de mesure 30 sont mesurées par chaque accéléromètre 60 pendant la rotation du bol 55.

En outre, au moins une valeur de température de la tête de pulvérisateur 45, notamment de la jupe 50, est mesurée par un capteur de température 60 lorsque le pulvérisateur 20 est dans la position de repos.

Les valeurs de diagnostic sont générées de manière similaire au premier exemple d'installation, les valeurs d'accélération utilisées étant des valeurs d'accélération de la première station 35 et non des valeurs d'accélération du pulvérisateur 20.

Postérieurement à l'étape de mesure 320, le pulvérisateur est déplacé par le robot 15 jusqu'à une position de nettoyage dans laquelle le pulvérisateur 20 est accueilli au moins partiellement dans l'ouverture 140 de la deuxième station.

Le pulvérisateur 20 est nettoyée et/ou la réserve remplie de fluide F au cours de l'étape d'entretien 340, de manière connue en soi.

Le troisième exemple permet notamment de mesurer le potentiel électrique, notamment lorsque le potentiel électrique présente la deuxième valeur, même si cette deuxième valeur est très élevée par rapport au reste de l'installation 10. En effet, puisque le module de mesure 30 n'est pas intégré à la station prévue pour nettoyer le pulvérisateur ou remplir la réserve mais à une station 35 dédiée, cette station 35 est plus aisée à isoler du reste de l'installation 10.

Selon une variante, deux premières stations 35 au moins sont présentes. Par exemple, l'une des premières stations 35 comporte le capteur 60 de potentiel électrique, et l'autre première station 35, ou la deuxième station, comporte les autres capteurs 60. Ce mode de réalisation limite en particulier les risques que le potentiel élevé du pulvérisateur 20 entraîne un endommagement des autres capteurs 60 ou des dispositifs associés.

Il est à noter que dans le deuxième ou le troisième exemple, la mesure d'une valeur du potentiel par une station 35 est optionnelle. Selon des modes de réalisation envisageables, des valeurs d'autres paramètres du pulvérisateur sont effectuées, sans qu'une valeur du potentiel ne soit mesurée.

## Revendications

1. Pulvérisateur (20) comportant une tête de pulvérisateur (45) configurée pour projeter un premier fluide (F)
le pulvérisateur (20) comportant, en outre, un module de mesure (30) comportant au moins un capteur (60) configuré pour mesurer des valeurs d'au moins un paramètre du pulvérisateur (20), un module électronique de commande (70) configuré pour recevoir les valeurs mesurées et une alimentation électrique (65) configurée pour alimenter électriquement le module de commande (70) avec une tension d'alimentation électrique,
dans lequel la tête de pulvérisateur (45) est configurée pour être portée à une première valeur de potentiel électrique lorsque le pulvérisateur (20) est au repos et à une deuxième valeur de potentiel électrique lorsque la tête de pulvérisateur (45) projette le premier fluide, la deuxième valeur étant strictement supérieure à la première valeur, une différence entre les première et deuxième valeurs étant notamment supérieure ou égale à 10 kilovolts,
**caractérisé en ce que**
le module de mesure (30) comporte un point de référence commun (82) des potentiels électriques du module de mesure (30), le point de référence (82) étant électriquement connecté à la tête de pulvérisateur (45).

2. Pulvérisateur selon la revendication 1, comportant une base (40) destinée à être fixée à un robot (15) configuré pour déplacer le pulvérisateur (20) et comportant au moins un conduit d'alimentation de la tête de pulvérisateur (45) avec le premier fluide (F) ou avec un deuxième fluide, la base (40) présentant une face de liaison à laquelle la tête de pulvérisateur (45) est fixée, la base (40) et la tête de pulvérisateur (45) étant alignées selon un axe (A1), le conduit d'alimentation débouchant sur la face de liaison, la face de liaison comportant au moins une vanne configurée pour obturer le conduit d'alimentation, dans lequel le module de mesure (30) comporte une bague (80) entourant la face de liaison dans un plan perpendiculaire à l'axe (A1).

3. Pulvérisateur selon la revendication 2, dans lequel la bague (80) est configurée pour coopérer avec la tête de pulvérisateur (45) et/ou avec la base (40) pour empêcher des projections de fluide (F) d'atteindre au moins un capteur (60), l'alimentation (65) et/ou le module de commande (70) depuis l'extérieur du module de mesure (30).

4. Pulvérisateur selon l'une quelconque des revendications 1 à 3, dans lequel la tête de pulvérisateur (45) comporte une turbine, un bol (55) destiné à être entraîné en rotation par la turbine pour projeter le premier fluide (F) lorsque le premier fluide est injecté dans le bol, et une jupe (50) destinée à générer des flux d'air de conformation du premier fluide (F) projeté.

5. Pulvérisateur selon la revendication 2 ou 3, prise avec la revendication 4, dans lequel la bague (80) est en appui contre la jupe (50).

6. Pulvérisateur selon la revendication 4 ou 5, dans lequel le point de référence (82) des potentiels électriques est électriquement connecté à la jupe (50).

7. Pulvérisateur selon l'une quelconque des revendications 4 à 6, dans lequel au moins un capteur (60) est un accéléromètre, le module de commande (30) étant configuré pour commander une mesure, par l'accéléromètre (60), d'une accélération du pulvérisateur (20) pendant une rotation du bol (55).

8. Pulvérisateur selon l'une quelconque des revendications 1 à 7, dans lequel au moins un capteur (60) est configuré pour mesurer une température du pulvérisateur (20).

9. Pulvérisateur selon la revendication 8, prise avec l'une quelconque des revendications 4 à 7, dans lequel ledit capteur (60) est configuré pour mesurer une température de la jupe (50).

10. Pulvérisateur selon l'une quelconque des revendications précédentes, comportant en outre au moins une vanne comprenant un pointeau mobile entre deux positions, dans lequel au moins un capteur (60) est configuré pour mesurer une position du pointeau de la vanne.

11. Pulvérisateur selon l'une quelconque des revendications 1 à 10, dans lequel au moins un capteur (60) est un accéléromètre, le module de commande (30) étant configuré pour commander une mesure, par l'accéléromètre (60), d'une accélération du pulvérisateur (20) pendant un déplacement du pulvérisateur (20).

12. Pulvérisateur selon la revendication 11, dans lequel le module de commande (70) est configuré pour comparer au moins une valeur d'accélération mesurée pendant un déplacement du pulvérisateur (20) à un seuil prédéterminé et pour détecter un choc subi par le pulvérisateur (20) en fonction de la comparaison.

13. Pulvérisateur selon l'une quelconque des revendications 1 à 12, dans lequel au moins un capteur (60) est un microphone.

14. Pulvérisateur selon l'une quelconque des revendications 1 à 13, dans lequel l'alimentation (65) comporte un organe de stockage d'énergie électrique (105).

15. Installation (10) comportant un robot (15) équipé d'un pulvérisateur (20) selon l'une quelconque des revendications 1 à 14 et un dispositif électronique (25) d'analyse, le module de commande (70) étant configuré pour générer, à partir des valeurs mesurées, un message de diagnostic et pour transmettre le message de diagnostic au dispositif d'analyse (25).

16. Installation selon la revendication 15, dans laquelle le dispositif d'analyse (25) est distant du robot (15), le dispositif d'analyse (25) étant fixe dans un référentiel de l'installation (10).

17. Installation selon la revendication 16, comportant une station (35) fixe dans un référentiel de l'installation (10), dans lequel le robot (15) est configuré pour déplacer le pulvérisateur (20) entre une position de fonctionnement et une position de transfert de données, le module de commande (70) étant configuré pour transmettre le message de diagnostic au dispositif d'analyse (25), notamment par communication radiofréquence, lorsque le pulvérisateur (20) est dans la position de transfert de données, la station (35) comportant un module (125) de réception du message de diagnostic et étant configurée pour transférer le message de diagnostic reçu au dispositif d'analyse (25).

18. Installation selon la revendication 17, dans laquelle la station (35) est configurée pour nettoyer la tête de pulvérisateur (45) lorsque le pulvérisateur (20) est dans la position de transfert de données, la tête de pulvérisateur (45) étant accueillie à l'intérieur de la station (35) lorsque le pulvérisateur (20) est dans la position de transfert de données.

19. Installation selon la revendication 17 ou 18, dans laquelle la station (35) comporte au moins un premier contact électrique, le pulvérisateur (20) comportant au moins un deuxième contact électrique configuré pour être connecté au premier contact lorsque le pulvérisateur (20) est dans la position de transfert de données, le module de commande (70) étant configuré pour transmettre le message de diagnostic au module de réception (125) via les premier et deuxième contacts électriques.

20. Installation selon l'une quelconque des revendications 17 à 19 dans laquelle l'alimentation (65) comporte un organe de stockage d'énergie électrique (105), la station (35) comportant un module de recharge (127) configuré pour charger électriquement l'organe de stockage d'énergie électrique (105) lorsque le pulvérisateur (20) est dans la position de transfert de données.

21. Procédé de mesure d'au moins un paramètre d'un pulvérisateur (20) comportant une tête de pulvérisateur (45) configurée pour projeter un premier fluide (F) et un module de mesure (30) comportant au moins un capteur (60) configuré pour mesurer des valeurs d'au moins un paramètre du pulvérisateur (20), un module électronique de commande (70) configuré pour recevoir les valeurs mesurées et une alimentation électrique (65) configurée pour alimenter électriquement le module de commande (70) avec une tension d'alimentation électrique, le procédé comportant une étape (220) de mesure, par le capteur (60) d'au moins une valeur d'un paramètre du pulvérisateur (20), le module de mesure (30) comportant un point de référence (82) des potentiels électriques du module de mesure (30), le point de référence (82) étant électriquement connecté à la tête de pulvérisateur (45), le procédé comportant une étape d'augmentation (210) d'un potentiel électrique de la tête de pulvérisateur (45) depuis une première valeur jusqu'à une deuxième valeur, la tête de pulvérisateur (45) présentant la deuxième valeur de potentiel électrique au cours de l'étape de mesure (220).

## Patentansprüche

1. Sprühgerät (20), umfassend einen Sprühkopf (45), der konfiguriert ist, um ein erstes Fluid (F) zu versprühen, das Sprühgerät (20) ferner umfassend ein Messmodul (30), das mindestens einen Sensor (60) umfasst, der konfiguriert ist, um Werte mindestens eines Parameters des Sprühgeräts (20) zu messen, ein elektronisches Steuermodul (70), das konfiguriert ist, um die gemessenen Werte zu empfangen, und eine Stromversorgung (65), die konfiguriert ist, um das Steuermodul (70) elektrisch mit einer elektrischen Versorgungsspannung zu versorgen, wobei der Sprühkopf (45) konfiguriert ist, um auf einen ersten Wert des elektrischen Potenzials gebracht zu werden, wenn das Sprühgerät (20) in Ruhezustand ist, und auf einen zweiten Wert des elektrischen Potenzials, wenn der Sprühkopf (45) das erste Fluid versprüht, wobei der zweite Wert strikt größer ist als der erste Wert, wobei eine Differenz zwischen dem ersten und dem zweiten Wert insbesondere größer als oder gleich wie 10 Kilovolt ist, **dadurch gekennzeichnet, dass** das Messmodul (30) einen gemeinsamen Bezugspunkt (82) der elektrischen Potentiale des Messmoduls (30) umfasst, wobei der Bezugspunkt (82) elektrisch mit dem Sprühkopf (45) verbunden ist.

2. Sprühgerät nach Anspruch 1, umfassend eine Basis (40), die dazu bestimmt ist, an einem Roboter (15) befestigt zu werden, der konfiguriert ist, um das Sprühgerät (20) zu bewegen und umfassend mindestens eine Versorgungsleitung des Sprühkopfs (45) mit dem ersten Fluid (F) oder mit einem zweiten Fluid, wobei die Basis (40) eine Verbindungsfläche aufweist, an der der Sprühkopf (45) befestigt ist, die Basis (40) und der Sprühkopf (45) entlang einer Achse (A1) ausgerichtet sind, die Versorgungsleitung in die Verbindungsfläche mündet, die Verbindungsfläche umfassend mindestens ein Ventil, das konfiguriert ist, um die Versorgungsleitung zu verschließen, wobei das Messmodul (30) einen Ring (80) umfasst, der die Verbindungsfläche in einer Ebene senkrecht zu der Achse (A1) umgibt.

3. Sprühgerät nach Anspruch 2, wobei der Ring (80) konfiguriert ist, um mit dem Sprühkopf (45) und/oder der Basis (40) zusammenzuwirken, um zu verhindern, dass Fluidspritzer (F) von außerhalb des Messmoduls (30) mindestens einen Sensor (60), die Stromversorgung (65) und/oder das Steuermodul (70) erreichen.

4. Sprühgerät nach einem der Ansprüche 1 bis 3, wobei der Sprühkopf (45) eine Turbine, eine Schale (55), die von der Turbine in Drehung versetzt werden soll, um das erste Fluid (F) auszuspritzen, wenn das erste Fluid in die Schüssel eingespritzt wird, und eine Schürze (50) aufweist, die dazu dient, formgebende Luftströme des ausgespritzten ersten Fluids (F) zu erzeugen.

5. Sprühgerät nach Anspruch 2 oder 3, zusammengenommen mit Anspruch 4, wobei der Ring (80) an der Schürze (50) anliegt.

6. Sprühgerät nach Anspruch 4 oder 5, wobei der Bezugspunkt (82) der elektrischen Potenziale elektrisch mit der Schürze (50) verbunden ist.

7. Sprühgerät nach einem der Ansprüche 4 bis 6, wobei mindestens ein Sensor (60) ein Beschleunigungsmesser ist, wobei das Steuermodul (30) konfiguriert ist, um eine Messung einer Beschleunigung des Sprühgeräts (20) durch den Beschleunigungsmesser (60) während einer Drehung der Schüssel (55) zu steuern.

8. Sprühgerät nach einem der Ansprüche 1 bis 7, wobei mindestens ein Sensor (60) konfiguriert ist, um eine Temperatur des Sprühgeräts (20) zu messen.

9. Sprühgerät nach Anspruch 8, zusammengenommen mit einem der Ansprüche 4 bis 7, wobei der Sensor (60) konfiguriert ist, um eine Temperatur der Schürze (50) zu messen.

10. Sprühgerät nach einem der vorherigen Ansprüche, ferner umfassend mindestens ein Ventil, das eine Nadel umfasst, die zwischen zwei Positionen beweglich ist, wobei mindestens ein Sensor (60) konfiguriert ist, um eine Position der Ventilnadel zu messen.

11. Sprühgerät nach einem der Ansprüche 1 bis 10, wobei mindestens ein Sensor (60) ein Beschleunigungsmesser ist, wobei das Steuermodul (30) konfiguriert ist, um eine Messung einer Beschleunigung des Sprühgeräts (20) durch den Beschleunigungsmesser (60) während einer Bewegung des Sprühgeräts (20) zu steuern.

12. Sprühgerät nach Anspruch 11, wobei das Steuermodul (70) konfiguriert ist, um mindestens einen während einer Bewegung des Sprühgeräts (20) gemessenen Beschleunigungswert mit einem vorbestimmten Schwellenwert zu vergleichen und einen von dem Sprühgerät (20) erlittenen Stoß abhängig von dem Vergleich zu erfassen.

13. Sprühgerät nach einem der Ansprüche 1 bis 12, wobei mindestens ein Sensor (60) ein Mikrofon ist.

14. Sprühgerät nach einem der Ansprüche 1 bis 13, wobei die Stromversorgung (65) ein Speicherelement für elektrische Energie (105) umfasst.

15. Anlage (10), umfassend einen Roboter (15), der mit einem Sprühgerät (20) nach einem der Ansprüche 1 bis 14 ausgestattet ist, und eine elektronische Analysevorrichtung (25), wobei das Steuermodul (70) konfiguriert ist, um aus den gemessenen Werten eine Diagnosemeldung zu erzeugen und die Diagnosemeldung an die Analysevorrichtung (25) zu übertragen.

16. Anlage nach Anspruch 15, wobei die Analysevorrichtung (25) von dem Roboter (15) entfernt ist, wobei die Analysevorrichtung (25) in einem Bezugssystem der Anlage (10) stationär ist.

17. Anlage nach Anspruch 16, umfassend eine Station (35), die in einem Bezugssystem der Anlage (10) feststehend ist, in der der Roboter (15) konfiguriert ist, um die Sprühvorrichtung (20) zwischen einer Betriebsposition und einer Datenübertragungsposition zu bewegen, wobei das Steuermodul (70) konfiguriert ist, um die Diagnosenachricht an die Analysevorrichtung (25) zu übertragen, insbesondere durch Hochfrequenzkommunikation, wenn das Sprühgerät (20) in der Datenübertragungsposition ist, wobei die Station (35) ein Modul (125) zum Empfangen der Diagnosemeldung umfasst und konfiguriert ist, um die empfangene Diagnosemeldung an die Analysevorrichtung (25) zu übertragen.

18. Anlage nach Anspruch 17, wobei die Station (35) konfiguriert ist, um den Sprühkopf (45) zu reinigen, wenn das Sprühgerät (20) in der Datenübertragungsposition ist, wobei der Sprühkopf (45) im Inneren der Station (35) aufgenommen ist, wenn das Sprühgerät (20) in der Datenübertragungsposition ist.

19. Anlage nach Anspruch 17 oder 18, wobei die Station (35) mindestens einen ersten elektrischen Kontakt aufweist, das Sprühgerät (20) mindestens einen zweiten elektrischen Kontakt aufweist, der konfiguriert ist, um mit dem ersten Kontakt verbunden zu sein, wenn das Sprühgerät (20) in der Datenübertragungsposition ist, wobei das Steuermodul (70) konfiguriert ist, um die Diagnosenachricht über den ersten und den zweiten elektrischen Kontakt an das Empfangsmodul (125) zu übertragen.

20. Anlage nach einem der Ansprüche 17 bis 19, wobei die Stromversorgung (65) ein elektrisches Energiespeicherelement (105) umfasst, wobei die Station (35) ein Lademodul (127) umfasst, das konfiguriert ist, um das elektrische Energiespeicherorgan (105) elektrisch aufzuladen, wenn das Sprühgerät (20) in der Datenübertragungsposition ist.

21. Verfahren zum Messen mindestens eines Parameters eines Sprühgeräts (20), umfassend einen Sprühkopf (45), der konfiguriert ist, um ein erstes Fluid (F) zu versprühen, und ein Messmodul (30), umfassend mindestens einen Sensor (60), der konfiguriert ist, um Werte mindestens eines Parameters des Sprühgeräts (20) zu messen, ein elektronisches Steuermodul (70), das konfiguriert ist, um die gemessenen Werte zu empfangen, und eine Stromversorgung (65), die konfiguriert ist, um das Steuermodul (70) elektrisch mit einer elektrischen Versorgungsspannung zu versorgen, wobei das Verfahren einen Schritt (220) zum Messen mindestens eines Werts eines Parameters des Sprühgeräts (20) durch den Sensor (60) umfasst, das Messmodul (30) umfassend einen Bezugspunkt (82) der elektrischen Potentiale des Messmoduls (30), wobei der Referenzpunkt (82) elektrisch mit dem Sprühkopf (45) verbunden ist, das Verfahren umfassend einen Schritt eines Erhöhens (210) eines elektrischen Potentials des Sprühkopfs (45) von einem ersten Wert auf einen zweiten Wert, wobei der Sprühkopf (45) während des Messschritts (220) den zweiten Wert des elektrischen Potenzials aufweist.

## Claims

1. An atomizer (20) having an atomizer head (45) configured to atomize a first fluid (F)
the atomizer (20) further comprising a measurement module (30) comprising at least one sensor (60) configured to measure the values of at least one parameter of the atomizer (20), an electronic control module (70) configured to receive the measured values, and a power supply (65) configured to electrically supply the control module (70) with a power supply voltage,
wherein the atomizer head (45) is configured to be brought to a first electrical potential value when the atomizer (20) is at rest and to a second electrical potential value when the atomizer head (45) atomizes the first fluid, the second value being strictly higher than the first value, a difference between the first and second values being in particular greater than or equal to 10 kilovolts,
**characterized in that** the measurement module (30) comprises a common reference point (82) of the electrical potentials of the measurement module (30), the reference point (82) being electrically connected to the atomizer head (45).

2. The atomizer according to the claim 1, comprising a base (40) for attachment to a robot (15) configured to move the atomizer (20) and having at least one duct for supplying the atomizer head (45) with the first fluid (F) or with a second fluid, the base (40) having a connecting face to which the atomizer head (45) is attached, the base (40) and the atomizer head (45) being aligned along an axis (A1), the supply duct opening onto the connecting face, the connecting face comprising at least one valve configured to close off the supply duct, wherein the measurement module (30) comprises a ring (80) surrounding the connecting face in a plane perpendicular to the axis (A1).

3. The atomizer according to the claim 2, wherein the ring (80) is configured to associate with the atomizer head (45) and/or the base (40) to prevent splashing fluid (F) from reaching at least one sensor (60), the supply (65) and/or the control module (70) from outside the measurement module (30).

4. The atomizer according to any one of the claims 1 to 3, wherein the atomizer head (45) comprises a turbine, a bowl (55) able to be rotated by the turbine to atomize the first fluid (F) when the first fluid is injected into the bowl, and a skirt (50) for generating shaping air flows of the atomized first fluid (F).

5. The atomizer according to the claim 2 or 3, taken together with claim 4, in which the ring (80) rests against the skirt (50).

6. The atomizer according to the claim 4 or 5, wherein the reference point (82) of the electrical potentials is electrically connected to the skirt (50).

7. The atomizer according to any one of the claims 4 to 6, wherein at least one sensor (60) is an accelerometer, the control module (30) being configured to control a measurement, by the accelerometer (60), of an acceleration of the atomizer (20) during a rotation of the bowl (55).

8. The atomizer according to any one of the claims 1 to 7, wherein at least one sensor (60) is configured to measure a temperature of the atomizer (20).

9. The atomizer according to the claim 8, taken with any one of claims 4 to 7, wherein the said sensor (60) is configured to measure a temperature of the skirt (50).

10. The atomizer according to any one of the preceding claims, further comprising at least one valve including a valve needle movable between two positions, wherein at least one sensor (60) is configured to measure a position of the valve needle.

11. The atomizer according to any one of the claims 1 to 10, wherein at least one sensor (60) is an accelerometer, the control module (30) being configured to control a measurement, by the accelerometer (60), of an acceleration of the atomizer (20) during a movement of the atomizer (20).

12. The atomizer according to the claim 11, wherein the control module (70) is configured to compare at least one acceleration value measured during a movement of the atomizer (20) with a predetermined threshold and to detect a shock to the atomizer (20) based on the comparison.

13. The atomizer according to any one of the claims 1 to 12, wherein at least one sensor (60) is a microphone.

14. The atomizer according to any one of the claims 1 to 13, wherein the power supply (65) comprises an electrical energy storage device (105).

15. An installation (10) comprising a robot (15) equipped with an atomizer (20) according to any one of the claims 1 to 14 and an electronic evaluation device (25), wherein the control module (70) is configured to generate a diagnostic message from the measured values and to transmit the diagnostic message to the evaluation device (25).

16. The installation according to the claim 15, in which the evaluation device (25) is remote from the robot (15), the evaluation device (25) being fixed in a reference frame of the installation (10).

17. The installation according to the claim 16, comprising a station (35) fixed in a reference frame of the installation (10), wherein the robot (15) is configured to move the atomizer (20) between an operating position and a data transfer position, the control module (70) is configured to transmit the diagnostic message to the evaluation device (25), in particular by radiofrequency communication, when the atomizer (20) is in the data transfer position, the station (35) comprising a module (125) for receiving the diagnostic message and being configured to transfer the diagnostic message received to the evaluation device (25).

18. The installation according to the claim 17, wherein the station (35) is configured to clean the atomizer head (45) when the atomizer (20) is in the data transfer position, the atomizer head (45) being housed within the station (35) when the atomizer (20) is in the data transfer position.

19. The installation according to the claim 17 or 18, wherein the station (35) comprises at least one first electrical contact, the atomizer (20) having at least one second electrical contact configured to be connected to the first contact when the atomizer (20) is in the data transfer position, the control module (70) being configured to transmit the diagnostic message to the receiver module (125) via the first and second electrical contacts.

20. The installation according to any one of the claims 17 to 19 wherein the supply (65) comprises an electrical energy storage device (105), the station (35) comprises a charging module (127) configured to electrically charge the electrical energy storage device (105) when the atomizer (20) is in the data transfer position.

21. A method for measuring at least one parameter of an atomizer (20) comprising an atomizer head (45) configured to atomize a first fluid (F) and a measurement module (30) comprising at least one sensor (60) configured to measure values of at least one parameter of the atomizer (20), an electronic control module (70) configured to receive the measured values and a power supply (65) configured to electrically supply the control module (70) with a power supply voltage, the method comprises a measurement step (220) to measure, by the sensor (60), at least one value of a parameter of the atomizer (20), the measurement module (30) comprising a reference point (82) for electrical potentials of the measurement module (30), the reference point (82) being electrically connected to the atomizer head (45), the method comprising an increasing step (210) of the electrical potential of the atomizer head (45) from a first value to a second value, the atomizer head (45) having the second electrical potential value during the measurement step (220).
